(19) Europäisches Patentamt
European Patent Office
Office européen des brevets

(11) **EP 4 648 393 A1**

(12) **EUROPEAN PATENT APPLICATION**
published in accordance with Art. 153(4) EPC

(43) Date of publication:
**12.11.2025 Bulletin 2025/46**

(51) International Patent Classification (IPC):
**H04M 1/02** (2006.01)

(21) Application number: 23933816.3

(22) Date of filing: **15.11.2023**

(86) International application number:
**PCT/CN2023/131704**

(87) International publication number:
**WO 2024/216949 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.04.2023 CN 202310462969**

(71) Applicant: Honor Device Co., Ltd.
**Shenzhen, Guangdong 518040 (CN)**

(72) Inventors:
• **LIU, Xin**
Shenzhen, Guangdong 518040 (CN)
• **WEI, Yameng**
Shenzhen, Guangdong 518040 (CN)
• **FENG, Lei**
Shenzhen, Guangdong 518040 (CN)
• **LI, Haifei**
Shenzhen, Guangdong 518040 (CN)
• **YUAN, Leibo**
Shenzhen, Guangdong 518040 (CN)

(74) Representative: **Gill Jennings & Every LLP**
**The Broadgate Tower**
**20 Primrose Street**
**London EC2A 2ES (GB)**

(54) **FOLDABLE MOBILE TERMINAL**

(57) A foldable mobile terminal is provided. The foldable mobile terminal may be a foldable device such as a mobile phone, a tablet computer, or a notebook computer. In embodiments of this application, a gasket is arranged between a flexible screen and a rotating shaft mechanism. The gasket includes a connection region and a non-connection region in an arrangement direction of a rotating shaft body and a rotating member. The non-connection region is slidably arranged between the rotating shaft body and the flexible screen. When the flexible screen is folded or unfolded, a bending portion of the flexible screen first comes into contact with the non-connection region, and a spacing between the flexible screen and the non-connection region is small, which can reduce abnormal noise. Because the non-connection region can slide between the flexible screen and the rotating shaft body, the non-connection region may be synchronously deformed with the flexible screen, and always provide good support function for the flexible screen.

FIG. 5

EP 4 648 393 A1

## Description

This application claims priority to Chinese Patent Application No. 202310462969.X, filed with the China National Intellectual Property Administration on April 21, 2023 and entitled "FOLDABLE MOBILE TERMINAL", which is incorporated herein by reference in its entirety.

## TECHNICAL FIELD

Embodiments of this application relate to the field of electronic device technologies, and in particular, to a foldable mobile terminal.

## BACKGROUND

With the development of society and the progress of science and technology, more and more types of foldable mobile terminals are developed to satisfy different requirements of people's lives. A foldable mobile terminal includes two main body portions and a rotating shaft assembly. Relative folding and unfolding of the two main body portions of the foldable mobile terminal are achieved through the rotating shaft assembly. Currently, noise is generated during unfolding and folding of the foldable mobile terminal, seriously affecting product quality and user experience. Therefore, how to reduce or eliminate noise during unfolding or folding of the foldable mobile terminal is one of technical problems that persons skilled in the art have been focusing on.

## SUMMARY

Embodiments of this application provide a foldable mobile terminal, which has little noise when being folded or unfolded.

An embodiment of this application provides a foldable mobile terminal. The foldable mobile terminal may be a foldable device such as a mobile phone, a tablet computer, or a notebook computer. The foldable mobile terminal includes:

a rotating shaft mechanism, including a rotating shaft body and a rotating member, where the rotating member is rotatably arranged on the rotating shaft body;

a flexible screen, arranged on a side of the rotating shaft mechanism, where the rotating member is configured to rotate about the rotating shaft body to cause the flexible screen to switch between a folded state and an unfolded state; and

a gasket, arranged between the rotating shaft mechanism and the flexible screen, where in an arrangement direction of the rotating shaft body and the rotating member, the gasket includes a connection region and a non-connection region that are connected to each other, the connection region is fixedly connected to at least one of the rotating shaft body, the rotating member, or the flexible screen, and the non-connection region is slidably arranged between the rotating shaft body and the flexible screen.

The gasket may be connected to one or more of the rotating shaft body, the rotating member, or the flexible screen through an adhesive component. The adhesive component may include gum, structural adhesive, or the like. The non-connection region is at least partially located between the rotating shaft body and the flexible screen. When the flexible screen is folded or unfolded, the connection region drives the non-connection region to slide between the flexible screen and the rotating shaft body. That is, the non-connection region is separated from the flexible screen and the rotating shaft mechanism, and can move relative to the flexible screen and the rotating shaft mechanism. In a specific embodiment, the non-connection region mainly slides at a position of a bending portion of the flexible screen.

The connection region may be a continuous structure. For example, the gasket includes a continuous adhesive layer, and the gasket is fixed to the rotating shaft body, the rotating member, and/or the flexible screen through the adhesive layer. Definitely, there may also be a plurality of discrete regions. For example, the gasket is fixed to the rotating shaft body, the rotating member, or/and the flexible screen through dispensing adhesive. The connection region may be connected to the rotating member of the rotating shaft mechanism. The rotating member is a component that can rotate around the rotating shaft body, for example, a swing arm or a plate. Definitely, in an example, the connection region may also be connected to the rotating shaft body.

In this embodiment of this application, the gasket is arranged between the flexible screen and the rotating shaft mechanism, and at least a part of the non-connection region of the gasket is located between the rotating shaft body and the flexible screen. When the flexible screen is folded or unfolded, the bending portion of the flexible screen is first in contact with the non-connection region. Compared with a conventional product in which the bending portion is directly in contact with the rotating shaft body, a spacing between the bending portion of the flexible screen and the non-connection region is small, which may reduce abnormal noise. In addition, the gasket is fixedly connected to the rotating member or the flexible screen through the connection region, and the gasket may synchronously rotate with a component fixedly connected to the gasket. Because the non-connection region can slide between the flexible screen and the rotating shaft body, the non-connection region may synchronously deform with the flexible screen, which always provides good support function for the flexible screen, so that deformation of the flexible screen can be reduced, and abnormal noise of the rotating shaft mechanism can be further reduced. In addition, a gap between the rotating shaft mechanism and the flexible screen can be reduced through the gasket, thereby improving assembly precision.

In an example, the rotating member includes a first plate and a second plate, where the first plate and the second plate are respectively rotatably connected to two sides of the rotating shaft body, and one of the first plate and the second plate is fixedly connected to the connection region. In this embodiment, the connection region of the gasket is relatively fixed to the first plate or the second plate, and can rotate together with the rotating shaft mechanism. The non-connection region of the gasket is a free deformation region. An extension length of the non-connection region may be determined according to a specific product. For example, a free side of the non-connection region away from the connection region may only extend to a position of the rotating shaft body, and definitely may also extend out of the rotating shaft body to a position of another plate. In this embodiment, only one side of the gasket is fixed, which is simple. When a space between the flexible screen and the rotating shaft mechanism changes, the non-connection region of the gasket is also easily deformed accordingly, with a fast response and good support performance for the flexible screen. In addition, surfaces of the first plate and the second plate facing the flexible screen are generally plane. The gasket is directly connected to the plate and is easily fixed. In addition, during rotation of the rotating shaft mechanism, deformation of the non-connection region is basically consistent with deformation of the flexible screen, and the gasket can have a good support effect on the flexible screen.

In an example, when the flexible screen is in the folded state, the non-connection region extends from the rotating shaft body to the other of the first plate and the second plate. In other words, the connection region of the gasket is located on a side of one of the first plate and the second plate, and a side of the non-connection region away from the connection region extends to a side of the other of the first plate and the second plate. In this example, the gasket is located between any one of the first plate, the rotating shaft body, and the second plate and the bending portion of the flexible screen. A size of the gasket in a direction in which the rotating shaft body and the rotating member are arranged is large, an envelope area of the bending portion of the flexible screen is also large, and a support effect of the bending portion of the flexible screen is also good, thereby further reducing abnormal noise.

In an example, the foldable mobile terminal further includes a screen protection layer, where the screen protection layer is located between the flexible screen and the gasket, the flexible screen includes a non-display surface facing the gasket, the screen protection layer is connected to the non-display surface of the flexible screen, and during folding or unfolding of the flexible screen, at least a part of a side of the non-connection region away from the connection region is located on a surface of the screen protection layer facing away from the flexible screen. The "side" in "a side of the non-connection region away from the connection region" described herein is a segment having a predetermined length. The non-connection region may slide relative to the screen protection layer, which prevents the gasket from being directly in contact with the flexible screen to damage the flexible screen. The screen protection layer may be made of elastic adhesive or elastic mylar, and may provide a good protection function for a back side of the flexible screen. The screen protection layer may basically cover the back side of the bending portion of the flexible screen, the screen protection layer extends from a position of the first plate to a position of the second plate, and the gasket may be completely located between the screen protection layer, the first plate, the second plate, and the rotating shaft body. In another example, the screen protection layer has a strip-shaped structure, and the gasket may be partially located between the screen protection layer and the rotating shaft mechanism. For example, the gasket is fixed to one of the first plate and the second plate, and the gasket is partially located between the screen protection layer and the other of the first plate and the second plate.

In an example, the side of the non-connection region away from the connection region includes at least one notch. The arrangement of the notch mainly considers a situation in which a gap between the flexible screen and the rotating shaft body is imbalanced in a rotating shaft direction. During unfolding or folding of the flexible screen, the flexible screen and a segment of the rotating shaft body can always be kept at a small distance, the segment can provide good support for the flexible screen, a portion of the flexible screen corresponding to the segment does not need to be supported, and a portion of the gasket corresponding to the segment may be set as the notch.

When the flexible screen is in the unfolded state, a distance between the flexible screen and some other segments of the rotating shaft body of the rotating shaft mechanism is large. During unfolding or folding of the flexible screen, these segments cannot provide good support function for the bending portion of the flexible screen, and gaskets need to be arranged between these segments and the flexible screen for support. In this way, use flexibility of the gasket and rotation flexibility of the rotating shaft mechanism are improved. In addition, the notch is provided to further help to reduce an entire weight of a product.

In an example, the foldable mobile terminal further includes a first elastic support layer, where the first elastic support layer is fixed to the non-display surface of the flexible screen, the first plate, or the second plate, and the first elastic support layer is located in the notch. The first elastic support layer can provide an auxiliary support function for the flexible screen, to ensure that the entire weight of the device is reduced while the gasket is used to reduce the gap between the flexible screen and the rotating shaft mechanism, thereby achieving a dual effect of reducing abnormal noise and reducing weight. The first elastic support layer may be a mylar or an adhesive layer.

In an example, in an axial direction of the rotating shaft mechanism, the gasket includes N segments connected to each other, the notch is formed between adjacent segments, and the foldable mobile terminal includes N screen protection layers arranged parallel to the axial direction of the rotating shaft mechanism and respectively in one-to-one correspondence with the segments, where N is an integer greater than 1. In this example, when it is satisfied that the gasket supports the flexible screen, a quantity of screen protection layers is set to N. The screen protection layer is arranged only at a corresponding segment, and the screen protection layer is not arranged at a position of the notch. In this way, the entire weight of the product can be reduced while contact and friction between the gasket and the flexible screen is avoided.

In an example, the foldable mobile terminal includes N gaskets in the axial direction of the rotating shaft mechanism, where adjacent gaskets are spaced apart from each other, and N is an integer greater than 1. Definitely, some or all of the gaskets may also be provided with notches. In this example, two or more gaskets are independent structures, which are easily processed and flexibly mounted.

In an example, the foldable mobile terminal further includes a second elastic support layer, where the second elastic support layer is fixed to the non-display surface of the flexible screen, the first plate, or the second plate, and the second elastic support layer is located between adjacent gaskets. The second elastic support layer can provide the auxiliary support function for the flexible screen, to ensure that the entire weight of the device is reduced while the gasket is used to reduce the gap between the flexible screen and the rotating shaft mechanism, thereby achieving a dual effect of reducing abnormal noise and reducing weight. The second elastic support layer may be a mylar or an adhesive layer.

In an example, the foldable mobile terminal includes at least two gaskets in the axial direction parallel to the rotating shaft mechanism, where connection regions of a part of gaskets are fixedly connected to the first plate, and connection regions of the other gaskets are fixedly connected to the second plate. In this example, non-connection regions of a part of gaskets extend from the rotating shaft body towards the first plate, and non-connection regions of the other gaskets extend from the rotating shaft body towards the second plate. In this way, the flexible screen can be better supported.

In an example, the foldable mobile terminal includes an elastic layer, and the elastic layer is arranged between the gasket and the rotating shaft mechanism. The elastic layer may be fixed to the gasket, or may be fixed to the first plate, the second plate, or the rotating shaft body. The gasket is in contact with the first plate, the second plate, and the rotating shaft body through the elastic layer. In this way, wear between the gasket and the rotating shaft mechanism can be avoided.

In an example, the elastic layer is an elastic mylar or elastic adhesive layer.

In an example, the rotating member includes a first plate and a second plate, where the first plate and the second plate are respectively rotatably connected to two sides of the rotating shaft body, the connection region is fixed to the rotating shaft body, and the non-connection region extends between the first plate and the flexible screen or extends between the second plate and the flexible screen. The connection region is fixed to the rotating shaft body, and the non-connection region extends between the first plate and the flexible screen or extends between the second plate and the flexible screen. In this example, a non-connection region may be provided on a single side (a side close to the first plate or the second plate) of the connection region. Definitely, non-connection regions may be provided on both sides (two sides close to the first plate or the second plate) of the connection region. In this example, structures of the first plate and the second plate do not need to be changed, and a length of the non-connection region may extend to a position of the first plate or the second plate on a corresponding side. In this way, a contact area with the bending portion of the flexible screen is as large as possible, thereby providing good support for the flexible screen.

In an example, in the arrangement direction of the rotating shaft body and the rotating member, the screen protection layer includes a first side wall and a second side wall that are arranged opposite to each other, where the second side wall extends to one of the first plate and the second plate, the first side wall extends to the other of the first plate and the second plate, and the first side wall is located on a side of the screen protection layer away from the connection region. In this way, a side edge of the non-connection region away from the connection region does not scratch the first side wall, which can further reduce rotation noise.

In an example, the flexible screen includes an arc segment and two straight line segments, where the arc segment is connected between the two straight line segments, the two straight line segments are respectively opposite to the first plate and the second plate when the flexible screen is in the folded state, and a width $L_1$ of the gasket is in a range of:

$$L > L_1 > \frac{(L + H_1 + H_2 + K_1 H_3)(180 + \pi(90 + \theta)\tan\theta)}{180 \tan\theta} - \frac{m}{\sin\theta} + L_{2d} \text{ or } 2L_{2d} > L_1$$

where $H_1$ is a thickness of the flexible screen; $H_2$ is a thickness of a screen protection layer; $H_3$ is a thickness of the gasket;

R is a bending radius of a display surface of the arc segment when the flexible screen is in the folded state; θ is an angle between the straight line segment of the flexible screen and a vertical direction when the flexible screen is in the folded state; $L_1$ is the width of the gasket, $L$ is a width of the rotating shaft mechanism when the flexible screen is in the unfolded state, m is a distance between a side edge of the connection region away from the non-connection region and a reference plane of the rotating shaft mechanism when the flexible screen is in the folded state; $K_1$ is a bending neutral layer coefficient of the gasket; and $L_{2d}$ is a distance between the first side wall of the screen protection layer and the reference plane when the flexible screen is in the unfolded state, where the reference plane is perpendicular to the flexible screen in the unfolded state, and a rotating shaft of the first plate relative to the rotating shaft body and a rotating shaft of the second plate relative to the rotating shaft body are symmetrical about the reference plane.

It is simple and easy to determine the length of the gasket by using the foregoing method.

In an example, the screen protection layer is arranged on a side away from the connection region, and in the arrangement direction of the rotating shaft body and the rotating member, the screen protection layer includes a first side wall and a second side wall that are arranged opposite to each other, the first side wall is located on a side of the screen protection layer away from the connection region, and during folding or unfolding of the flexible screen, a side edge of the non-connection region away from the connection region is always located on a side of the first side wall away from the rotating shaft body, or during folding or unfolding of the flexible screen is folded or unfolded, a side edge of the non-connection region away from the connection region is always located between the first side wall and the second side wall. In this way, the side edge of the non-connection region away from the connection region does not scratch a side wall of the screen protection layer, thereby reducing rotation noise.

In an example, the flexible screen includes an arc segment and two straight line segments, where the arc segment is connected between the two straight line segments, and the two straight line segments are respectively opposite to the first plate and the second plate when the flexible screen is in the folded state, and the connection region is fixedly connected to at least one of the rotating shaft body, the rotating member, or the flexible screen through an adhesive layer.

When $L_{1d} > L_{2d}$, a width of the gasket is in a range of:

$$L > L_1 > \frac{(R+H_1+H_2+K_1H_3)(180+\pi(90+\theta)\tan\theta)}{180\tan\theta} - \frac{m}{\sin\theta} + L_{2d};$$

or
when $L_{2d} > L_{1d} > L_{3d}$, a width of the gasket is in a range of:

$$L_1 > \frac{(R+H_1+H_4+K_1H_3)(180+\pi(90+\theta)\tan\theta)}{180\tan\theta} - \frac{m}{\sin\theta} + L_{3d};$$

where $H_1$ is a thickness of the flexible screen; $H_2$ is a thickness of the screen protection layer; $H_3$ is a thickness of the gasket; $H_4$ is a thickness of the adhesive layer; R is a bending radius of a display surface of the arc segment when the flexible screen is in the folded state; θ is an angle between the straight line segment and a vertical direction when the flexible screen is in the folded state; $L_1$ is the width of the gasket; L is a width of the rotating shaft mechanism when the flexible screen is in the unfolded state; m is a distance between a side edge of the connection region away from the non-connection region and a reference plane of the rotating shaft mechanism when the flexible screen is in the folded state; $K_1$ is a bending neutral layer coefficient of the gasket; $L_{1d}$ is a distance between a side edge of the non-connection region away from the connection region and the reference plane when the flexible screen is in the unfolded state; $L_{2d}$ is a distance between the first side wall of the screen protection layer and the reference plane when the flexible screen is in the unfolded state; and $L_{3d}$ is a distance between the second side wall of the screen protection layer and the reference plane of the rotating shaft mechanism when the flexible screen is in the unfolded state, where the reference plane is perpendicular to the flexible screen in the unfolded state, and a rotating shaft of the first plate relative to the rotating shaft body and a rotating shaft of the second plate relative to the rotating shaft body are symmetrical about the reference plane.

The calculation method is accurate, so that the width of the gasket can be accurately calculated.

**BRIEF DESCRIPTION OF DRAWINGS**

FIG. 1 is a schematic diagram of a rotating shaft mechanism and a bending portion of a flexible screen in the related art in an unfolded state;
FIG. 2 is a schematic diagram of the structure shown in FIG. 1 at a specific moment in a process in which two plates are folded relative to each other;

FIG. 3 is a schematic structural diagram of a foldable mobile terminal in an unfolded state according to an exemplary embodiment of this application;

FIG. 4 is a schematic structural diagram of the foldable mobile terminal shown in FIG. 2 in a folded state (only a rotating shaft mechanism and a flexible screen are shown);

FIG. 5 is a schematic partial diagram of the structure shown in FIG. 4 in an unfolded state, where only some members are shown;

FIG. 6 is a schematic enlarged view at A1 in FIG. 5;

FIG. 7 is a schematic diagram of a gasket shown in FIG. 5 in an X direction;

FIG. 8 is a schematic diagram of the structure shown in FIG. 5 with a rotating shaft mechanism hidden in an X direction;

FIG. 9 is a schematic diagram of relative positions of a connection region and a non-connection region according to another example of this application;

FIG. 10 is a schematic partial diagram of a foldable mobile terminal in an unfolded state according to another example of this application;

FIG. 11 is a schematic diagram of the structure shown in FIG. 5 in a folded state, where a rotating shaft mechanism is hidden;

FIG. 12 is a schematic enlarged view at A in FIG. 11;

FIG. 13 is a schematic diagram of some members in a foldable mobile terminal are in an unfolded state according to another embodiment of this application;

FIG. 14 is a schematic diagram of the structure shown in FIG. 13 in a folded state;

FIG. 15 is a schematic structural diagram of a rotating shaft mechanism and a part of a flexible screen in an unfolded state according to yet another embodiment of this application;

FIG. 16 is a schematic diagram of the structure shown in FIG. 15 in a folded state;

FIG. 17 is a schematic diagram of a rotating shaft mechanism and a part of a flexible screen in an unfolded state according to still another embodiment of this application;

FIG. 18 is a schematic diagram of the structure shown in FIG. 17 in an X direction, where a rotating shaft mechanism is hidden;

FIG. 19 is a schematic diagram of the structure shown in FIG. 17 in a Y direction, where a flexible screen is hidden;

FIG. 20 is a schematic cross-sectional view of a flexible screen and a rotating shaft body along a reference plane according to an embodiment of this application;

FIG. 21 is a schematic structural diagram of a gasket according to another embodiment of this application;

FIG. 22 is a schematic cross-sectional view of a component formed by the gasket shown in FIG. 21, a flexible screen, a screen protection layer, a rotating shaft body, and the like along a reference plane;

FIG. 23 is a schematic diagram of a rotating shaft mechanism and a part of a flexible screen in an unfolded state according to a fifth embodiment of this application;

FIG. 24 is a schematic diagram of a structure shown in FIG. 24 in a Y direction;

FIG. 25 is a schematic diagram of the structure shown in FIG. 24 in an X square;

FIG. 26 is a schematic diagram of positions of gaskets according to still another embodiment of this application;

FIG. 27 is a schematic diagram of a rotating shaft mechanism and a part of the flexible screen in a foldable mobile terminal having the gasket shown in FIG. 26 in an unfolded state;

FIG. 28 is a schematic diagram of the structure shown in FIG. 27 in a Y direction, where a flexible screen is hidden;

FIG. 29 is a schematic diagram of the structure shown in FIG. 27 in an X direction, where a rotating shaft mechanism is hidden;

FIG. 30 is a schematic diagram of positions of gaskets according to yet another embodiment of this application;

FIG. 31 is a schematic diagram of a rotating shaft mechanism and a part of the flexible screen in a foldable mobile terminal having the gasket shown in FIG. 30 in an unfolded state;

FIG. 32 is a schematic diagram of the structure shown in FIG. 31 in a Y direction, where a flexible screen is hidden; and

FIG. 33 is a top view of a gasket and a rotating shaft mechanism according to an embodiment of this application.

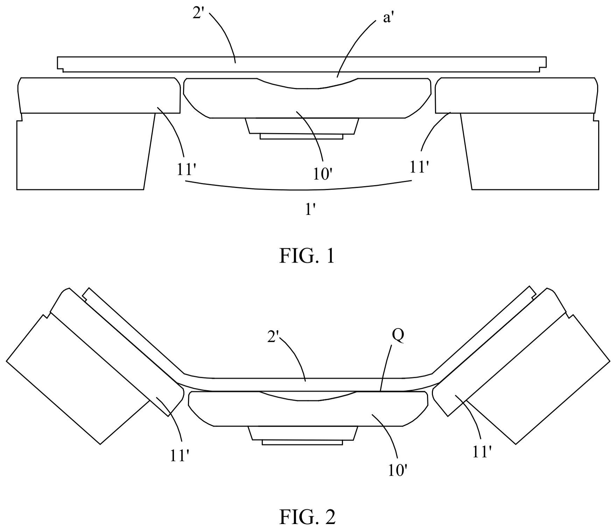

Description of reference numerals in FIG. 1 to FIG. 33 is as follows:

1' Rotating shaft mechanism; 10' Rotating shaft body; 11' Plate; 2' Flexible screen;

101 First main body portion; 102 Second main body portion;

1 Rotating shaft mechanism; 10 Rotating shaft body; 1-1 Base; 1-2 Intermediate support surface; 10A Rotating member; 11 First plate; 12 Second plate;

2 Flexible screen; 21 Connection portion; 22 Bending portion; 221 Straight line segment; 222 Arc segment;

3 Gasket; 31 Connection region; 311 Second side edge; 32 Non-connection region; 321 First side edge; 33 First surface; 34 Second surface; 4 Screen protection layer; 41 First side wall; 42 Second side wall; 5 Back adhesive 51 First adhesive layer; 52 Second adhesive layer; 6 Elastic layer; 7 First elastic support layer; 8 Second elastic support layer;

S1 Arrangement direction of rotating shaft body and rotating member; S2 Axial direction of rotating shaft mechanism; S3 Thickness direction.

## DESCRIPTION OF EMBODIMENTS

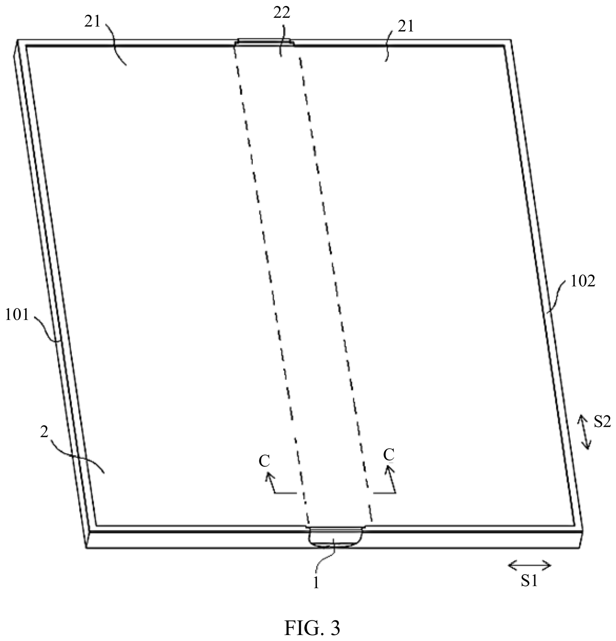

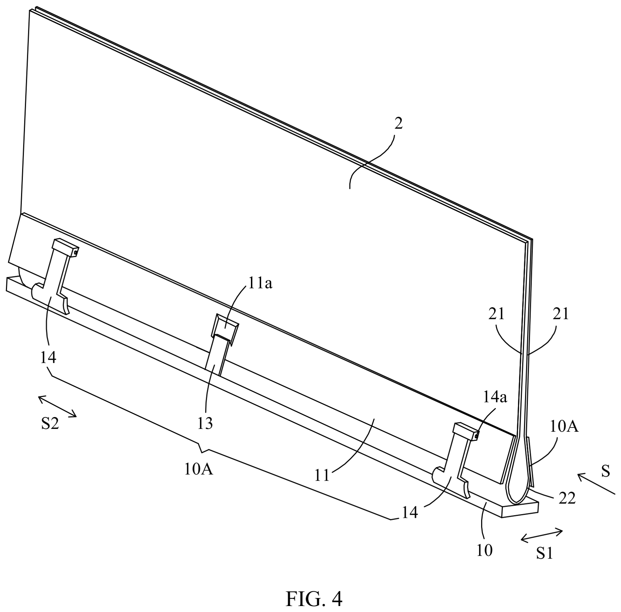

For a technical problem that noise is generated during unfolding and folding of a foldable mobile terminal mentioned in the background, currently, a solution in the art focuses on changing a structure of a rotating shaft mechanism. For example, currently, most rotating shaft mechanisms are hinge mechanisms, and currently, a person skilled in the art mainly improves a specific shape and structure of the hinge mechanism to reduce rotation noise. Although structural improvement of the rotating shaft mechanism can reduce the rotation noise, currently, space for improvement of the rotating shaft mechanism is very limited, and it is difficult to further reduce the rotation noise. The inventor of this application performs a lot of in-depth research on the foldable mobile terminal, and found in the research that: Refer to FIG. 1 and FIG. 2, a rotating shaft mechanism 1' includes a rotating shaft body 10' and plates 11' located at two sides of the rotating shaft body 10'. The two plates 11' can rotate relative to the rotating shaft body 10', so that the foldable mobile terminal can be folded or unfolded. The two plates 11' are respectively fixedly connected to a main body portion (for the foldable mobile terminal being a mobile phone, the main body portion is a middle frame) on a corresponding side. Relative positions of the main body portion and the plate are understood with reference to FIG. 3 and FIG. 4. To satisfy that the foldable mobile terminal is folded and unfolded, an intermediate bending portion of a flexible screen 2' of the foldable mobile terminal is generally not fixed to the rotating shaft mechanism, and adaptable deformation occurs in the bending portion during rotation of the plate. Theoretically, when the foldable mobile terminal is in an unfolded state, an upper surface of the rotating shaft body 10' and the plates 11' on two sides jointly support the bending portion. When the flexible screen is folded, the rotating shaft body 10' moves downwards relatively, to provide space for the bending portion of the flexible screen 2' to deform downwards. Due to factors such as a design error, a processing error, or a mounting error, during folding or unfolding of the flexible screen, movement of the rotating shaft body 10' may be asynchronous with deformation of the flexible screen 2', resulting in a phenomenon of scratch or collision between the flexible screen and the rotating shaft body 10', thereby generating abnormal noise. Particularly, when a gap a' exists between the rotating shaft body 10' and the flexible screen 2' in the unfolded state, once the rotating shaft body 10' collides with the flexible screen 2' (a contact position Q between the rotating shaft body 10' and the flexible screen 2' is shown in FIG. 2) during folding, abnormal noise is particularly serious. Therefore, to improve user experience, when the flexible screen is folded or unfolded, abnormal rotation noise generated due to a change in relative positions of the rotating shaft body 10' of the rotating shaft mechanism 1' and the flexible screen 2' during folding or unfolding of the flexible screen needs to be reduced.

Based on the foregoing research findings, the inventor of this application further explores and provides an invention idea that is quite different from a current solution of the noise, to further reduce the noise during folding and unfolding of the flexible screen.

To enable a person skilled in the art to better understand technical solutions of embodiments of this application, embodiments of this application are further described in detail in the following with reference to the accompanying drawings and the specific embodiments.

In embodiments of this application, terms "first" and "second" are used merely for a purpose of description, and shall not be understood as an indication or implication of relative importance or implicit indication of a quantity of indicated technical features. Therefore, a feature defined by "first" or "second" may explicitly or implicitly include one or more features.

Orientation terms, for example, "inner" and "outer", mentioned in embodiments of this application are only directions of the accompanying drawings. Therefore, the orientation terms used are intended to better and more clearly describe and understand embodiments of this application, rather than to indicate or imply that an indicated apparatus or element needs to have a specific orientation, or needs to be constructed and operated in a specific orientation, and therefore cannot be construed as a limitation on embodiments of this application.

In the description of embodiments of this application, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus.

The foldable mobile terminal in embodiments of this application may be a mobile terminal having a folding function such as a mobile phone, a tablet computer, a tablet computer accessory, a wearable device, an in-vehicle device, an augmented reality (augmented reality, AR) device/virtual reality (virtual reality, VR) device, a notebook computer, an ultra-mobile personal computer (ultra-mobile personal computer, UMPC), a netbook, or a personal digital assistant (personal digital assistant, PDA), or may be a professional photographing device such as a digital camera, a digital single lens reflex/an interchangeable lens digital camera, a sports camera, a tripod head camera, or an unmanned aerial vehicle. A specific type of the electronic device is not limited in embodiments of this application. For ease of understanding, an example in which the foldable mobile terminal is a mobile phone is used for description in the following.

As shown in FIG. 3, an embodiment of this application relates to a foldable mobile terminal. The foldable mobile terminal may include two main body portions, a rotating shaft mechanism 1, and a flexible screen 2. The two main body portions are respectively defined as a first main body portion 101 and a second main body portion 102. The first main body portion 101 and the second main body portion 102 are respectively located on left and right sides of the rotating shaft mechanism 1, and are connected to each other through the rotating shaft mechanism 1. The first main body portion 101 and the second main body portion 102 can be folded and unfolded relative to each other by using the rotating shaft mechanism 1. For the mobile phone, the first main body portion 101 and the second main body portion 102 may be middle frames. The middle frame may provide a mounting basis for mounting of electronic devices such as the flexible screen 2, a circuit board, and a mainboard. A mounting cavity may be formed in the middle frame. Various electronic devices of the foldable mobile terminal, such as an antenna, the mainboard, a camera module, and the foregoing transmission module, are arranged in the mounting cavity. The middle frame may play a role in protecting the electronic devices. The first main body portion 101 and the second main body portion 102 are determined according to the foldable mobile terminal. This is not specifically limited in this specification. The following continues to describe the technical solution and the technical effect by using the first main body portion 101 and the second main body portion 102 as middle frames.

At least a part of the flexible screen 2 of the foldable mobile terminal can be supported on the middle frame and is connected to the middle frame. During relative folding and unfolding of the two middle frames (the first main body portion 101 and the second main body portion 102), the flexible screen 2 is simultaneously in a folded state and an unfolded state. Structures of left and right middle frames (the first main body portion 101 and the second main body portion 102) may be the same or may not be completely the same. Specific structures of the two middle frames may be stable according to a specific product, and are not specifically limited in this specification.

The flexible screen 2 may be a liquid crystal display (liquid crystal display, LCD) screen, an organic light emitting diode (organic light emitting diode, OLED) flexible screen 2, or the like. The flexible screen 2 may be a common regular screen, or may be a special-shaped screen, a foldable screen, or the like. For example, the flexible screen 2 includes two connection portions 21 and one bending portion 22. Refer to FIG. 3 for understanding, the connection portion 21 mainly refers to a region of the flexible screen 2 that is configured to be relatively fixedly connected to the main body portion (the middle frame). In some examples, the connection portion 1 also includes a part that is fixedly connected to rotating plates (hereinafter referred to as a first plate and a second plate) of the rotating shaft mechanism 1. The bending portion 22 is connected between the two connection portions 21. The bending portion 22 is opposite to the rotating shaft mechanism 1 and is not fixed to another component. The bending portion 22 and the rotating shaft mechanism 1 can be freely rotated relative to each other and folded to form an arc, a sphere, a cylinder, a water drop, or the like. The bending portion of the flexible screen 2 in this embodiment of this application is approximately located in a region between outer edges of the first plate and the second plate. The flexible screen 2 is generally arranged on a front surface of the foldable mobile terminal. The front surface of the foldable mobile terminal may be understood as a side facing a user when the user uses the foldable mobile terminal, and a back surface of the foldable mobile terminal may be understood as a side facing away from a user when the user uses the foldable mobile terminal. The flexible screen 2 may include a display module and a transparent cover plate. The transparent cover plate covers an outer surface of the display module and is configured to protect the display module. The display module is configured to display an image, a video, and the like.

In this embodiment of this application, the flexible screen 2 not only has a display function, but also has a touch function. That is, the foldable mobile terminal can be operated by tapping the flexible screen 2.

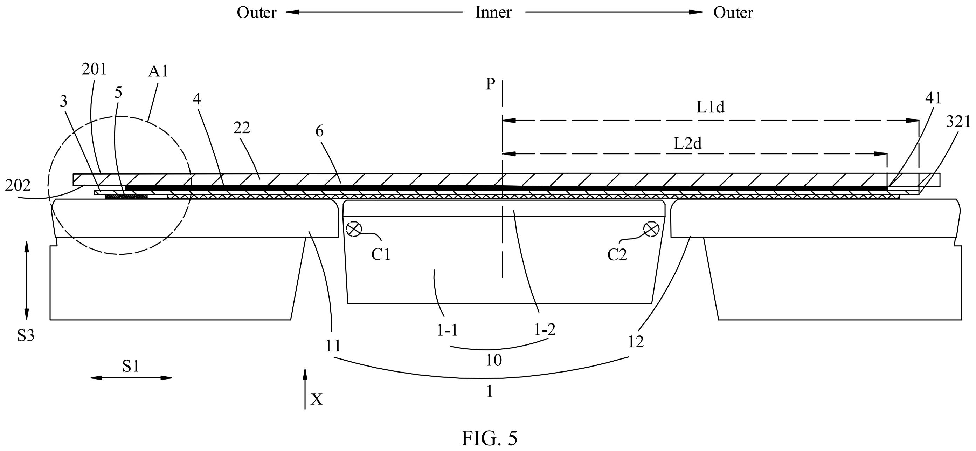

Refer to FIG. 4 again, in this embodiment of this application, the rotating shaft mechanism 1 includes a rotating shaft body 10, a first plate 11, and a second plate 12. The rotating shaft body 10 mainly provides a mounting basis for another part of the rotating shaft mechanism 1. Refer to FIG. 5, in an example, the rotating shaft body 10 includes a base 1-1, a surface of the base 1-1 facing the flexible screen 2 may be an intermediate support surface 1-2, and the intermediate support surface 1-2 and the base 1-1 may be an integrated structure, or the intermediate support surface 1-2 is fixedly connected to the base 1-1, that is, the intermediate support surface 1-2 is fixed relative to the base 1-1. Definitely, the intermediate support surface 1-2 may alternatively be movably connected relative to the base 1-1 in a thickness direction S3. In other words, the intermediate support surface 1-2 is in a form of a floating panel, and may also be referred to as an intermediate plate. The intermediate plate is located above the base 1-1, and the intermediate plate is in a floating connection relative to the base 1-1 in the thickness direction S3.

Refer to FIG. 4 again, a first swing arm 13 and a second swing arm 14 are further rotatably connected to two sides of the rotating shaft body 10. The swing arms are generally hinged to the rotating shaft body 10, and a quantity of each of the first swing arm 13 and the second swing arm 14 on each side may be two or more. Outer end portions of the first swing arm 13 and the second swing arm 14 are connected to plates on corresponding sides. In an embodiment, an outer end portion of the first swing arm 13 is slidably connected to a plate on a corresponding side. As shown in FIG. 4, during rotation of the first swing arm 13 around the rotating shaft body 10, the outer end portion of the first swing arm 13 may slide in a sliding groove 11a of the first plate 11. The second swing arm 14 may be pivotally connected to a plate on a corresponding side. FIG. 4 shows a pivot shaft 14a between the second swing arm 14 and the first plate 11. Definitely, the first swing arm 13 and the second swing arm 14 may also be connected to the corresponding plates in the same manner. In addition to the first swing arm 13 and the second swing arm 14, the base 10 may further be provided with another type of swing arm structure, which is not listed one by one in this specification. An outer end portion of each swing arm on one side of the rotating shaft body 10 is connected to the first plate 11, and an outer end portion of each swing arm on the other side of the rotating shaft body 10 is connected to the second plate 12. In this way, the first plate 11 and the second plate 12 can be unfolded or folded relative to each other under the driving of each swing arm. In this embodiment of this application, a side of a reference plane away from the rotating shaft mechanism is defined as being outer, and correspondingly, a side of the reference plane close to the rotating shaft mechanism is defined as being inner. For understanding, refer to markings in FIG. 5.

In this specification, a member that can rotate relative to the rotating shaft body 10 is collectively referred to as a rotating member 10A, and the foregoing first swing arm 13, the second swing arm 14, the first plate 11, and the second plate 12 all rotating members 10A.

In this embodiment of this application, the first main body portion 101 is fixedly connected to the first plate 11, and the second main body portion 102 is fixedly connected to the second plate 12. In this way, the first main body portion 101 rotates around the rotating shaft body 10 along with the first plate 11, and the second main body portion 102 may rotate around the rotating shaft body 10 along with the second plate 12, thereby achieving the folding or unfolding of the foldable mobile terminal. The first main body portion 101 and the first plate 11 may be fixed relative to each other by means of bonding, screw connection, or the like. Similarly, the second main body portion 102 and the second plate 12 may also be fixed relative to each other by means of bonding, screw connection, or the like.

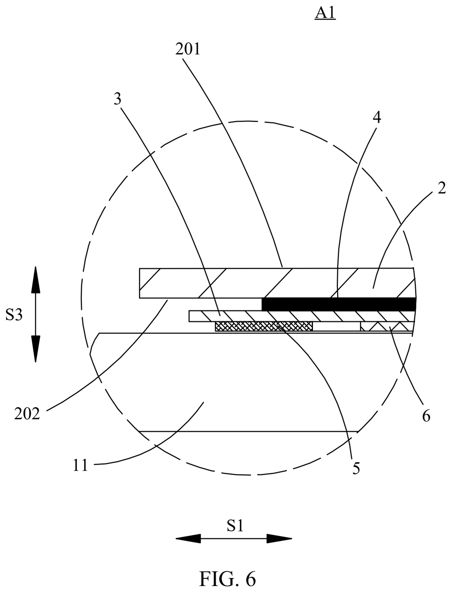

Refer to FIG. 5 and FIG. 6, in this embodiment of this application, the flexible screen 2 includes a display surface 201 and a non-display surface 202. The display surface 201 generally faces a side of the user, and the non-display surface 202 faces away from the user. FIG. 5 shows that a rotating shaft mechanism 1 and a gasket 3 are located on a side of a non-display surface 202 of a flexible screen 2 according to an embodiment of this application, and the gasket 3 is located between the flexible screen 2 and the rotating shaft mechanism 1. For example, the gasket 3 may be located between the bending portion 22 and the rotating shaft mechanism 1. A material of the gasket 3 may be a metal sheet, for example, a steel sheet. The gasket 3 may also be a non-metal sheet, for example, a rubber sheet or a plastic sheet.

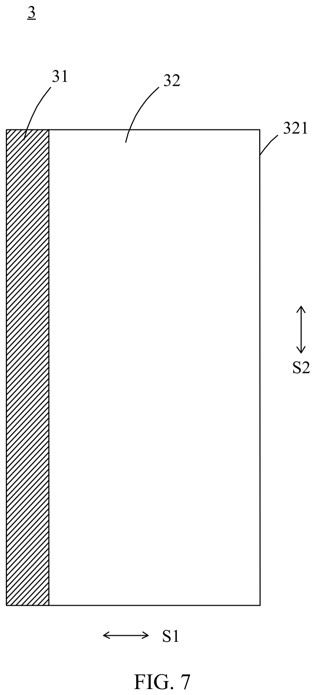

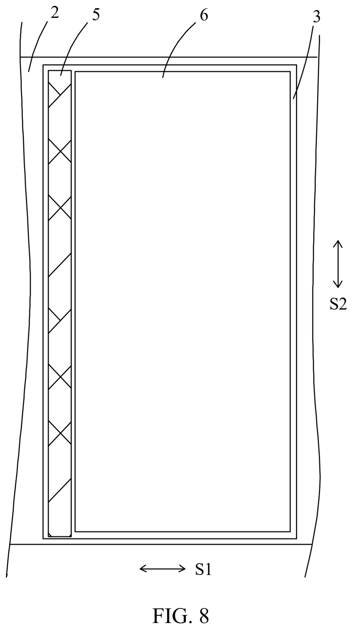

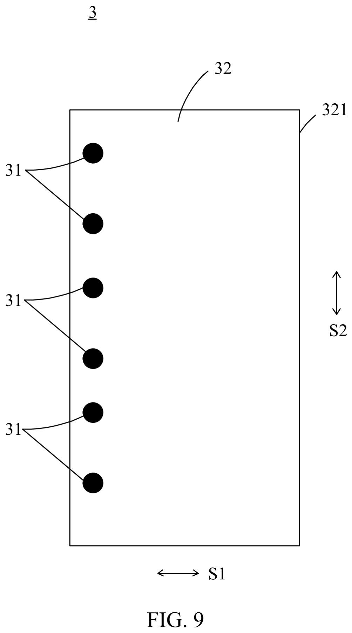

Refer to FIG. 6 again, in this embodiment of this application, a local region of one side of the gasket 3 is fixedly connected to the first plate 11 of the rotating shaft mechanism 1 by using a back adhesive 5, and another region of the gasket 3 is slidably arranged between the flexible screen 2 and the rotating shaft mechanism 1. It should be understood with reference to FIG. 7 that, the gasket 3 includes a connection region 31 and a non-connection region 32. The connection region 31 is fixedly connected to the first plate 11 by using the back adhesive 5. Under the rotation traction of the first plate 11, the gasket 3 may synchronously move with the rotating shaft mechanism 1 and the flexible screen 2, and the non-connection region 32 can slide in the space between the rotating shaft mechanism 1 and the flexible screen 2. Specifically, the non-connection region 32 is slidably arranged between the rotating shaft body 10 and the flexible screen 2. The connection region 31 on the gasket 3 may be a continuous structure. For example, as shown in FIG. 7, the connection region 31 may be an elongated region extending in an axial direction S2 of the rotating shaft mechanism. A shadow region in FIG. 7 is the connection region 31. Refer to FIG. 8 for understanding, the back adhesive 5 is bonded at the connection region 31. FIG. 7 is a schematic diagram of the structure shown in FIG. 5 with a rotating shaft mechanism hidden in an X direction. Definitely, the connection region 31 may alternatively be two or more discrete independent connection regions 31, as shown in a multi-point fixing manner in FIG. 9.

In this embodiment of this application, the gasket 3 is arranged between the flexible screen 2 and the rotating shaft mechanism 1. At least a part of the non-connection region 32 of the gasket 3 is located between the rotating shaft body 10 and the flexible screen 2. When the flexible screen 2 is folded, the bending portion 22 of the flexible screen 2 first comes into contact with the non-connection region 32. Compared with a spacing a' between the bending portion 22 and the rotating shaft body 10 in a conventional product in FIG. 1, in this embodiment of this application, there is almost no spacing between the bending portion 22 and the non-connection region 32 or the spacing between the bending portion 22 and the non-connection region 32 is small, which can reduce abnormal noise generated due to a collision. In addition, the gasket 3 is fixedly connected to the first plate 11 through the connection region 31. The gasket 3 may synchronously rotate with the first plate 11. The non-connection region 32 is separated from the flexible screen 2 and the rotating shaft body 10. The non-connection region 32 is slidably arranged, and may synchronously deform with the flexible screen 2, which always provides a good support function for the flexible screen 2, so that deformation of the flexible screen 2 can be reduced, and abnormal noise of the rotating shaft mechanism can be further reduced. In addition, a gap between the rotating shaft mechanism 1 and the flexible screen 2 can be reduced through the gasket 3, thereby improving assembly precision.

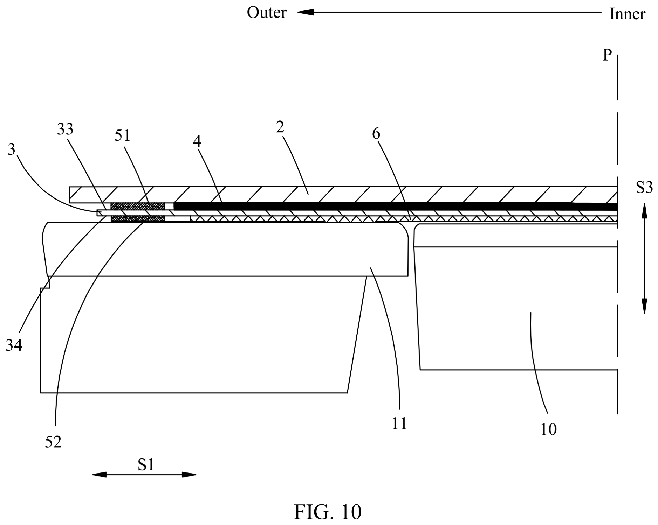

Definitely, the gasket 3 is not limited to being fixedly connected to the first plate 11 or the second plate 12 of the rotating shaft mechanism 1. The gasket 3 may also be fixedly connected to the flexible screen 2 and the first plate 11 simultaneously, or may be fixedly connected to the flexible screen 2 and the second plate 12 simultaneously. It should be understood with reference to FIG. 10, FIG. 10 shows only a schematic partial diagram of a side of a connection region 31 of a flexible screen in an unfolded state. A first surface 33 of the gasket 3 facing the flexible screen 2 is fixedly connected to the flexible screen 2 through a first adhesive layer 51, and a second surface 34 of the gasket 3 facing away from the flexible screen 2 is fixedly connected to the first plate 11 through a second adhesive layer 52. In this example, back adhesives are provided on both sides of the gasket 3, so that the first plate 11 and the flexible screen 2 can be simultaneously connected, and connection strength is high.

In another example, the connection region 31 of the gasket 3 may also be arranged on a side of the second plate 12, and a side of the non-connection region 32 away from the connection region 31 is located on a side of the first plate 11. In this case, the connection region 31 may be fixedly connected to the second plate 12 through the back adhesive 5, or may be fixedly connected to the second plate 12 and the flexible screen 2 simultaneously. For a specific arrangement manner, refer to the foregoing description on the fixed connection between the connection region 31 and the first plate 11.

In an example, the gasket 3 may further be fixed to another rotating member of the rotating shaft mechanism 1 that can rotate relative to the rotating shaft body 10, for example, the first swing arm 13 or the second swing arm 14. A principle of the gasket 3 being fixedly connected to the swing arm is basically the same as a principle of the gasket 3 being fixedly connected to the plate. Although no structural drawings are provided, a person skilled in the art can fully understand and implement the technical solution of the gasket 3 being fixedly connected to the swing arm according to descriptions in this specification.

In the foregoing example, in addition to being fixed to the rotating shaft mechanism 1 or the flexible screen 2 through the back adhesive 5, the gasket 3 may further be fixed through another component such as a double-sided adhesive tape or a structural adhesive. In other words, in this embodiment of this application, the foldable mobile terminal has a constraint component (the foregoing back adhesive 5), and the connection region 31 is fixedly connected or limitedly connected to at least one of the rotating shaft mechanism 1 and the flexible screen 2 through the constraint component, so that when the flexible screen is folded or unfolded, the connection region 31 of the gasket 3 drives the non-connection region 32 to slide between the bending portion 22 and the rotating shaft body 10. Because the non-connection region 32 is separated from the flexible screen 2 and the rotating shaft mechanism 1, the non-connection region 32 may be synchronously deformed with the flexible screen 2.

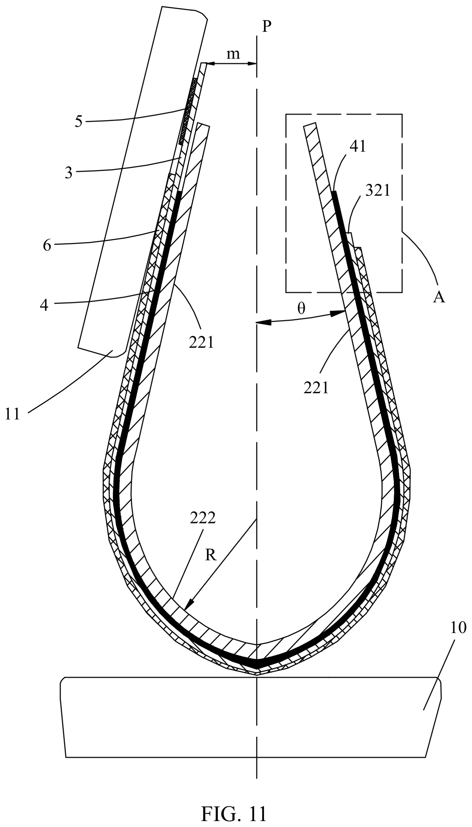

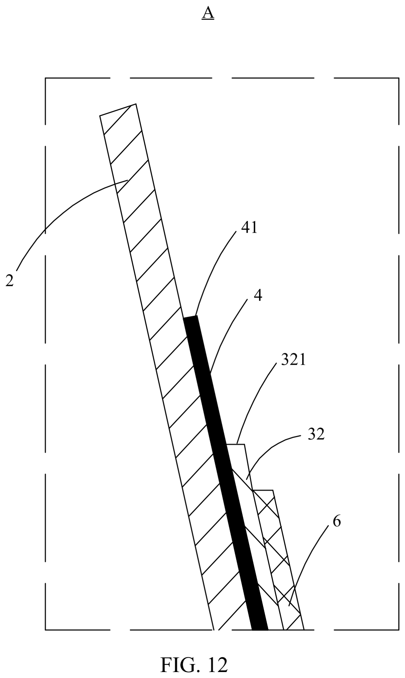

Refer to FIG. 11, FIG. 11 is a schematic structural diagram of components such as the flexible screen 2 and the gasket 3 shown in FIG. 5 in a folded state. For clarity of the diagram, FIG. 11 only shows the first plate 11, and the second plate 12 and the first plate 11 are symmetrical about a reference plane P. The foldable mobile terminal further includes a screen protection layer 4. The screen protection layer 4 is located between the flexible screen 2 and the gasket 3. The screen protection layer 4 is connected to the non-display surface 202 of the flexible screen 2, and the screen protection layer 4 may be a mylar layer. A main function of the screen protection layer 4 is to protect the flexible screen 2. As shown in FIG. 5, FIG. 11, and FIG. 12, relative positions of a side edge 321 of the non-connection region 32 away from a side of the connection region fixed to the back adhesive 5 and a first side wall 41 of the screen protection layer 4 are different. Refer to FIG. 5 for a concise description, in this embodiment of this application, the side edge of the non-connection region 32 away from the side of the connection region fixed to the back adhesive 5 is defined as a first side edge 321. When the flexible screen 2 is in the unfolded state, the first side edge 321 extends out of the first side wall 41 of the screen protection layer 4. Refer to FIG. 11 and FIG. 12, when the flexible screen is in the folded state, the first side edge 321 retracts to an inner side region of the first side wall 41 of the screen protection layer 4. In this way, during unfolding or folding of the flexible screen 2, the first side edge 321 may scratch the first side wall 41 of the screen protection layer 4 under the flexible screen 2. For the screen protection layer 4 being an adhesive component such as mylar, overflow glue of the screen protection layer 4 may be caused, and abnormal noise may also be generated.

Refer to FIG. 11, when the flexible screen 2 is in the folded state, the bending portion 22 may further be divided into two straight line segments 221 and an arc segment 222 according to different shapes of parts of the flexible screen 2. The arc segment 222 is connected between the two straight line segments 221. The arc segment 222 has a large bending degree. The two straight line segments 221 are respectively arranged opposite to the first plate 11 and the second plate 12. Theoretically, when the flexible screen 2 is in the folded state, the two straight line segments 221 can be respectively sticked to the first plate 11 and the second plate 12.

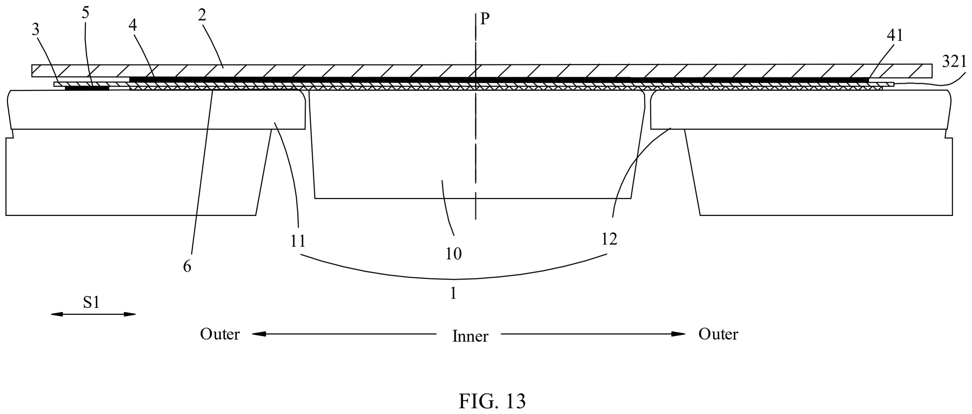

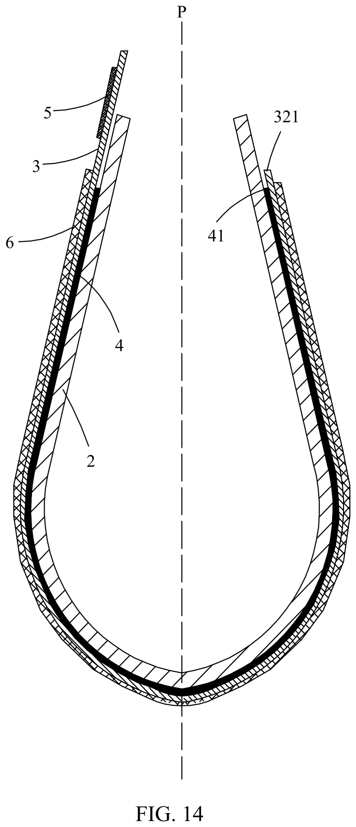

A mounting position and a width of the gasket 3 are further limited in this embodiment of this application. During rotation of the rotating shaft mechanism 1, at least a part of the first side edge 321 locates on a surface of the screen protection layer 4. For understanding with reference to FIG. 13 and FIG. 14, FIG. 13 is a schematic structural diagram of some members in a foldable mobile terminal when a flexible screen is in an unfolded state according to another embodiment of this application. It can be learned from FIG. 13 that, when the flexible screen 2 is in the unfolded state, the first side edge 321 extends out of the first side wall 41 of the screen protection layer 4. FIG. 14 is a schematic diagram of the structure shown in FIG. 13 in a folded state. It can be learned from FIG. 14 that, when the flexible screen 2 is in the folded state, the first side edge 321 also extends out of the first side wall 41 of the screen protection layer 4, that is, the first side edge 321 is located on an outer side of the first side wall 41 of the screen protection layer 4. In this way, during rotation of the rotating shaft mechanism 1, the first side edge 321 can always be located on the outer side of the first side wall 41 of the screen protection layer 4.

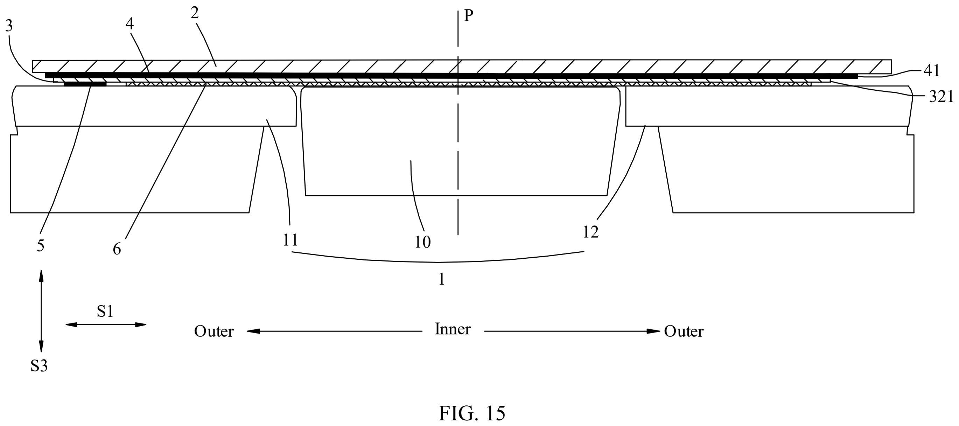

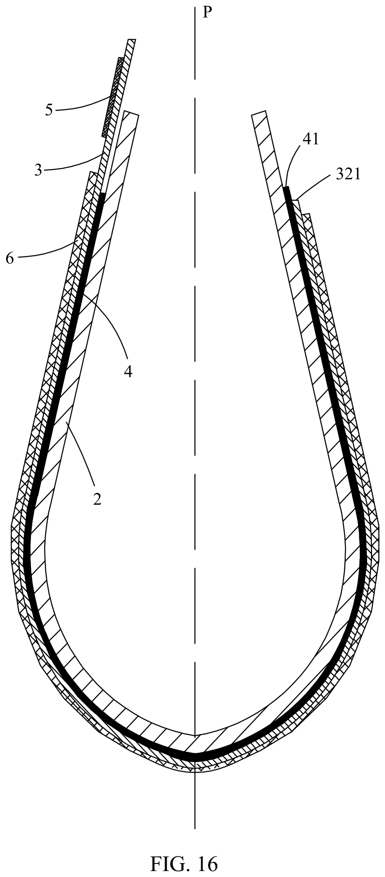

Alternatively, refer to FIG. 15 and FIG. 16, FIG. 15 is a schematic diagram of a foldable mobile terminal in an unfolded state according to yet another embodiment. In this case, the first side edge 321 is located on an inner side of the first side wall 41 of the screen protection layer 4. FIG. 16 is a schematic diagram of the structure shown in FIG. 15 in a folded state. In this case, the first side edge 321 is also located on the inner side of the first side wall 41 of the screen protection layer 4, that is, during rotation of the rotating shaft mechanism 1, the first side edge 321 can always be located on the inner side of the first side wall 41 of the screen protection layer 4.

Therefore, the first side edge 321 always moves on the same side of the first side wall 41 of the screen protection layer 4, and the first side edge 321 does not come into contact with the first side wall 41 of the screen protection layer back and forth, avoiding scratching the first side wall 41 of the screen protection layer 4, and preventing the screen protection layer 4 from overflowing with glue to generate abnormal noise.

As shown in FIG. 5, FIG. 11, and FIG. 13 to FIG. 16, the screen protection layer 4 may cover most regions of the bending portion 22 of the flexible screen 2. An area of the screen protection layer 4 is approximately equivalent to an area of the bending portion 22 of the flexible screen 2. The screen protection layer 4 extends from above the first plate 11 to the second plate 12. In this way, an area of the screen protection layer 4 between the gasket 3 and the flexible screen 2 is large, which can avoid as much as possible that the gasket 3 is in direct contact with the flexible screen 2, thereby reducing wear on the flexible screen 2.

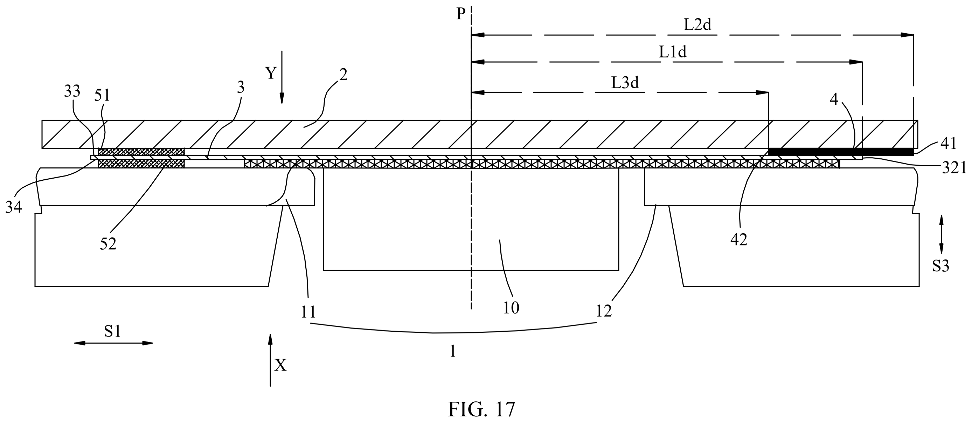

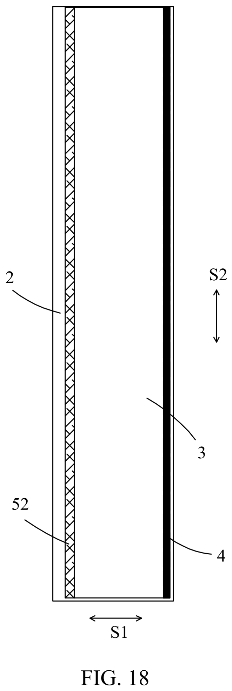

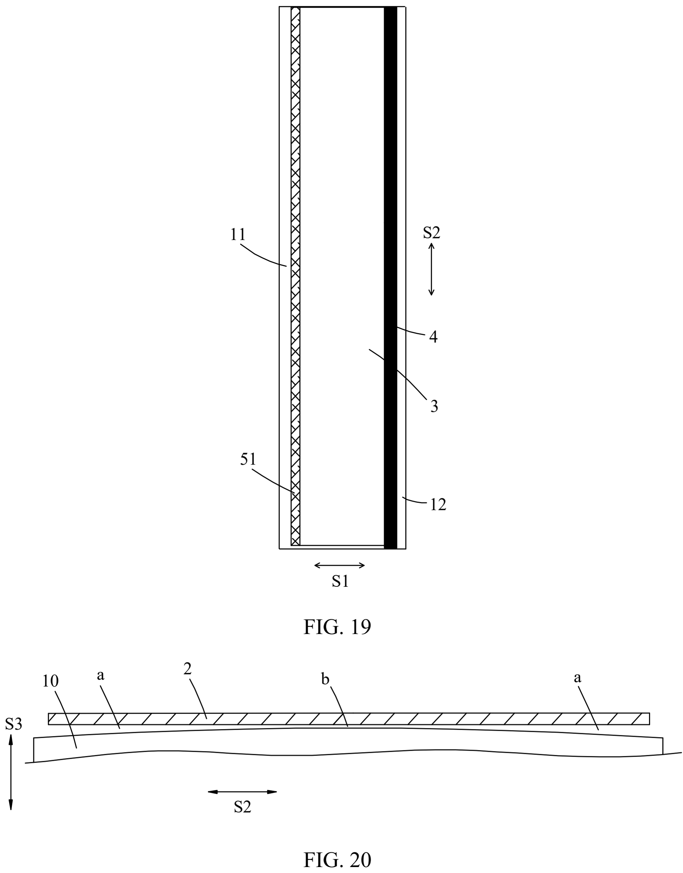

In another example, the screen protection layer 4 may also have a strip-shaped structure and cover only a small local region of the flexible screen 2. The screen protection layer 4 is arranged only at a side of the non-connection region 32 away from the connection region 31, to avoid that the first side edge 321 is in direct contact with the flexible screen 2 and reduce wear on the flexible screen 2 by the first side edge 321. Refer to FIG. 17, FIG. 18, and FIG. 19 for understanding. FIG. 18 is a schematic diagram of the structure shown in FIG. 17 in an X direction, where a rotating shaft mechanism is hidden; and FIG. 19 is a schematic diagram of the structure shown in FIG. 17 in a Y direction, where a flexible screen 2 is hidden. In another specific example, the screen protection layer 4 has a strip-shaped structure, extends in the axial direction S2 parallel to the rotating shaft mechanism 1, and is distributed only on a side close to the first side edge 321. In this example, the flexible screen 2 is provided with the screen protection layer 4 on a side of the non-connection region 32 away from the connection region 31, and the screen protection layer 4 extends in the axial direction S2 parallel to the rotating shaft mechanism 1. In an arrangement direction (a direction S1 in FIG. 17) of the rotating shaft body 10 and the rotating member, the screen protection layer 4 includes a second side wall 42 and a first side wall 41. The first side wall 41 is located at a position of the screen protection layer 4 away from the connection region 31. During rotation of the rotating shaft mechanism 1, the first side edge 321 is always located between the second side wall 42 and the first side wall 41, that is, the first side edge 321 of the non-connection region 32 away from the connection region 31 always slides between the second side wall 42 and the first side wall 41 of the screen protection layer 4.

Definitely, the first side edge 321 of the non-connection region 32 away from the connection region 31 may also be always located outside the first side wall 41 during rotation.

In the foregoing embodiment of the application, during rotation of the rotating shaft mechanism 1, at least a part of the side of the non-connection region 32 away from the connection region 31 is always located on a surface of the screen protection layer 4 facing away from the flexible screen 2, and the first side edge 321 of the non-connection region 32 away from the connection region 31 is not directly in contact with the flexible screen 2, avoiding that the first side edge 321 wears the flexible screen 2. In this embodiment, an area occupied by the screen protection layer 4 is small, which saves space and satisfies a lightweight design concept of the foldable mobile terminal.

Different foldable mobile terminals have different structures. In an embodiment, gaps between the flexible screen 2 and the rotating shaft mechanism 1 are not balanced in the axial direction S2. Refer to FIG. 20 for understanding, FIG. 20 is a cross-sectional view of a foldable mobile terminal along a reference plane according to an embodiment of this application, and only the flexible screen 2 and the rotating shaft body 10 are shown. It can be learned from FIG. 20 that, gaps a between two ends of the rotating shaft body 10 and two ends of the flexible screen 2 in the axial direction S2 are greater than a middle gap b between the rotating shaft body 10 and the flexible screen 2. In this way, when the rotating shaft mechanism 1 rotates, there is no need to add the gasket 3 at a position at which a gap between the flexible screen 2 and the rotating shaft body 10 is small. The rotating shaft body 10 itself can provide a good support function for a middle segment of the flexible screen 2, and only a gasket needs to be added at a position of the gap a. In other words, during folding or unfolding of the flexible screen 2, there is a small gap or no gap between a partial segment of the flexible screen 2 and the rotating shaft body 10 of the rotating shaft mechanism 1. In this way, deformation of the partial segment of the flexible screen 2 is basically consistent with movement of the rotating shaft body 10, and basically no abnormal noise is generated between the partial segment of the flexible screen 2 and the rotating shaft body 10. There is no need to arrange a gasket on a back side of the partial segment. The gasket 3 is arranged only at a position at which the gap between the flexible screen 2 and the rotating shaft body 10 is greater than a predetermined value.

An embodiment of this application further provides a gasket 3, which can be applicable to a structure in which gaps between the flexible screen 2 and the rotating shaft mechanism 1 are not balanced in the axial direction S2.

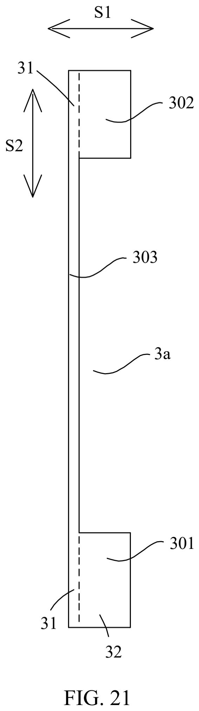

Refer to FIG. 21 for understanding, in an embodiment, a side of the non-connection region 32 away from the connection region 31 may include at least one notch 3a. FIG. 21 shows a specific example in which one notch 3a is provided for a gasket 3. The gasket 3 includes a first segment 301, a second segment 302, and an intermediate connection segment 303. The intermediate connection segment 303 is connected to the first segment 301 and the second segment 302. A width of the intermediate connection segment 303 in the direction S1 is smaller than that of either of the first segment 301 and the second segment 302. A size of the first segment 301 and the second segment 302 in the direction S1 is large, which can play a role in supporting the flexible screen 2 during rotation. The intermediate connection segment 303 mainly provide a function of connecting adjacent segments. The intermediate connection segment 303 may be also fixedly connected to the rotating member of the rotating shaft mechanism 1 or the flexible screen 2. Definitely, a quantity and a position of the notch 3a on one gasket 3 are not limited to the foregoing. The notch 3a may be located at an end portion in the direction S2, and the gasket 3 may include at least one segment. Alternatively, there may be two or more notches 3a, the gasket 3 includes two or more segments, and when rotating with the rotating shaft mechanism 1, the segments may be unfolded or folded with the flexible screen 2 to support the flexible screen 2.

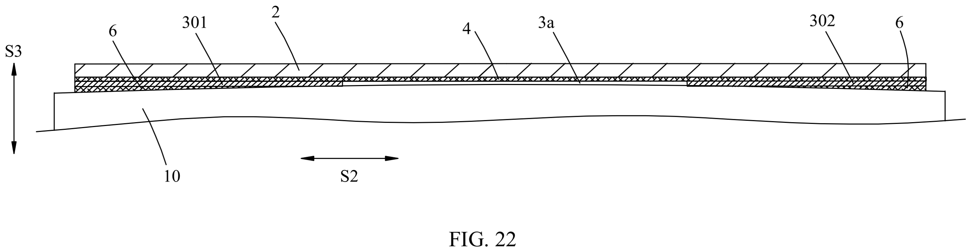

Refer to FIG. 22, FIG. 22 is a schematic diagram of the gasket 3 shown in FIG. 21 mounted between the flexible screen 2 and the rotating shaft body 10, and only a part of the rotating shaft body 10 is shown. In this embodiment, the notch 3a of the gasket 3 corresponds to a position at which a gap between the flexible screen 2 and the rotating shaft body 10 is small, and the segments are correspondingly arranged at a position at which gaps between the flexible screen 2 and the rotating shaft body 10 are large. In this way, a requirement for flexible rotation of the rotating shaft mechanism 1 can be satisfied while abnormal rotation noise is reduced, and provision of the notch 3a is further beneficial to reducing an entire weight of a product.

For better understanding, FIG. 21 shows dashed lines at the first segment 301 and the second segment 302. The dashed lines represent boundary lines between the connection region 31 and the non-connection region 32 of the segments. The intermediate connection segment 303 may be connected to end portions of the connection region 31 of the first segment 301 and the connection region 31 of the second segment 302. A size, thicknesses, and structure of each segment may be the same, or may be different.

In this embodiment, the intermediate connection segment 303 is located between two connection regions 31 of two segments, which has a simple molding process, and the intermediate connection segment 303 is fixedly connected to the rotating member of the rotating shaft mechanism 1 or the flexible screen 2, which can also improve fixing reliability of the gasket 3.

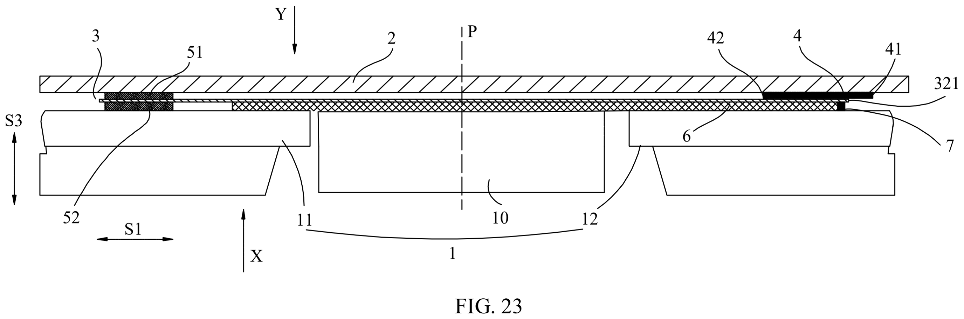

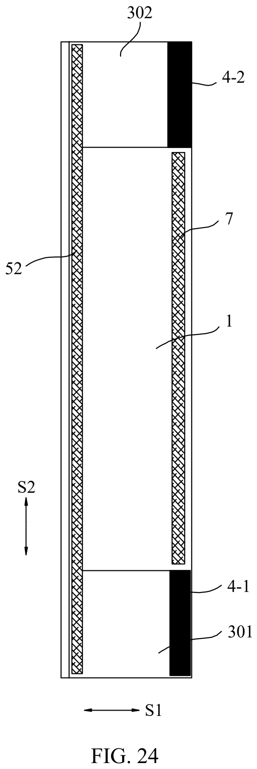

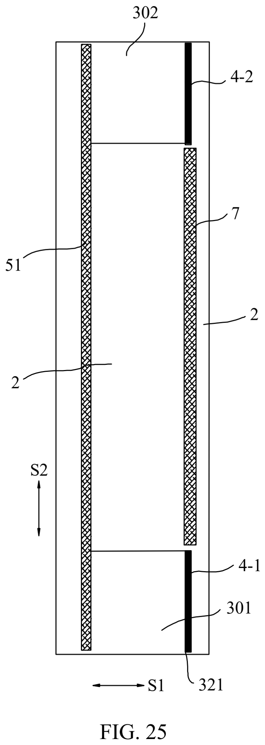

Refer to FIG. 23, in a specific embodiment, the screen protection layer 4 is also discontinuous in the axial direction S2 of the rotating shaft mechanism 1. Specific cases are shown in FIG. 24 and FIG. 25. There are two screen protection layers 4 in the direction S2, which are respectively a first screen protection layer 4-1 and a second screen protection layer 4-2. The first screen protection layer 4-1 corresponds to the first segment 301, and the second screen protection layer 4-2 corresponds to the second segment 302. For a positional relationship between the first side edge 321 of each segment and each screen protection layer, refer to the foregoing description. FIG. 23 shows that the first side edge 321 of each segment is located between the second side wall 42 and the first side wall 41 of the screen protection layer 4.

Definitely, the quantity of screen protection layers 4 is generally in one-to-one correspondence with the segments. The quantity of screen protection layers 4 is not limited to that described in this specification, and may alternatively be another value, for example, one or three or more.

Refer to FIG. 24 and FIG. 25, to further reduce abnormal noise and improve stability of folding and unfolding of the flexible screen 2, a first elastic support layer 7 may be arranged at a position of the notch 3a. The first elastic support layer 7 is fixed to the non-display surface 202 of the flexible screen 2 or fixed to the first plate 11 or the second plate 12, and mainly provides auxiliary support for a segment of the flexible screen 2 relative to the position of the notch 3a. The first elastic support layer 7 is close to the first side edge 321.

In this embodiment of this application, the first elastic support layer 7 located at the notch 3a may provide auxiliary support for a portion of the flexible screen 4 where no screen protection layer 4 is arranged, thereby improving stability of supporting the flexible screen 2.

In addition to providing the notch 3a on the gasket 3, the following settings may be provided to adapt to a situation in which the flexible screen 2 and the rotating shaft mechanism 1 have different gaps in the direction S2.

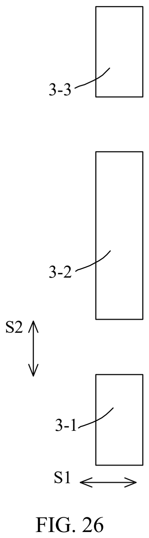

Refer to FIG. 26, in another specific example, a specific example in which three gaskets 3 are spaced apart from each other in the axial direction S2 is provided. The three gaskets 3 are respectively: a first gasket 3-1, a second gasket 3-2, and a third gasket 3-3, with a spacing between adjacent gaskets 3. Definitely, a quantity of gaskets 3 in the foldable mobile terminal is not limited to the foregoing three in this specification, and the quantity may be N, where N is greater than or equal to 2. The gaskets 3 are arranged in the axial direction S2 of the rotating shaft mechanism 1, and adjacent gaskets 3 are spaced apart from each other. The gaskets 3 may have the same structure, or definitely may have different structures. According to the gap between the flexible screen 2 and the rotating shaft mechanism 1, a gasket 3 of an appropriate thickness and size is selected for mounting, so that the flexible screen 2 and the rotating shaft mechanism 1 well fit each other after mounting, which is beneficial to improving rotation accuracy of the rotating shaft mechanism 1. The gaskets 3 are each of a split structure and are independent of each other, and therefore are easy to fabricate.

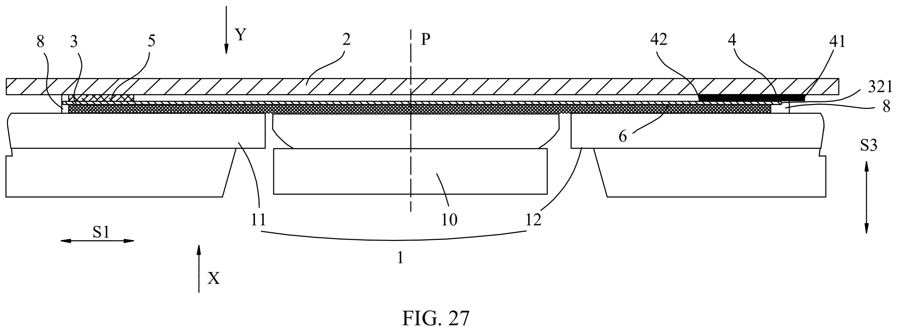

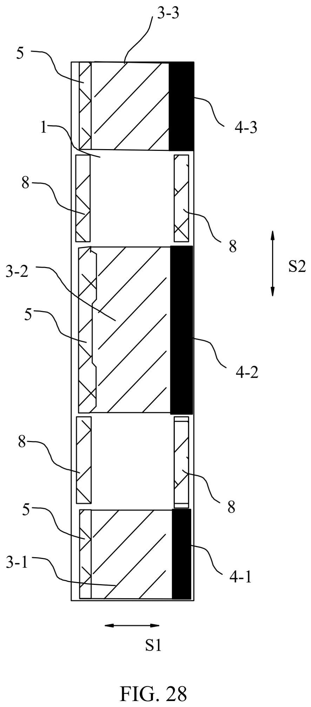

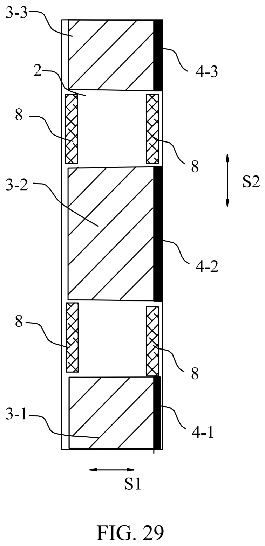

Refer to FIG. 27, FIG. 27 is a schematic diagram of FIG. 26 mounted in a foldable mobile terminal. In this embodiment of this application, the screen protection layer 4 also has a strip-shaped structure. Refer to FIG. 28 and FIG. 29 for understanding, the screen protection layer 4 is arranged close to the first side edge 321 of the gasket 3, and extends in the axial direction S2 of the rotating shaft mechanism. The screen protection layer 4 includes N segments, which are respectively in one-to-one correspondence with the gasket 3 arranged in the direction S1. FIG. 28 is used as an example, the screen protection layer 4 includes a first screen protection layer 4-1, a second screen protection layer 4-2, and a third screen protection layer 4-3, which are respectively arranged in correspondence with the first gasket 3-1, the second gasket 3-2, and the third gasket 3-3. In this embodiment of this application, the screen protection layer 4 is arranged in a split structure. The screen protection layer 4 is small in size, which is beneficial to reducing a weight of the foldable mobile terminal. In addition, the screen protection layer 4 is arranged in a strip-shaped region of the bending portion 22, and the screen protection layer 4 is not arranged at a portion corresponding to the rotating shaft body 10, which is beneficial to reducing a thickness of a middle region of the rotating shaft mechanism 1, and satisfying a lightweight design requirement of a mobile terminal.

Refer to FIG. 27 to FIG. 29 again, in this embodiment of this application, the foldable mobile terminal further includes a second elastic support layer 8, the second elastic support layer 8 is fixed to the non-display surface of the flexible screen 2 or the first plate 11 or the second plate 12, and the second elastic support layer 8 is located between adjacent gaskets 3. The second elastic support layer 8 may provide auxiliary support for a portion of the flexible screen 2 where no gasket 3 is arranged, thereby improving overall stability of the flexible screen 2 during folding or unfolding, and reducing abnormal rotation noise.

For a situation in which there are two or more independent gaskets 3, the gasket 3 may further be set as follows.

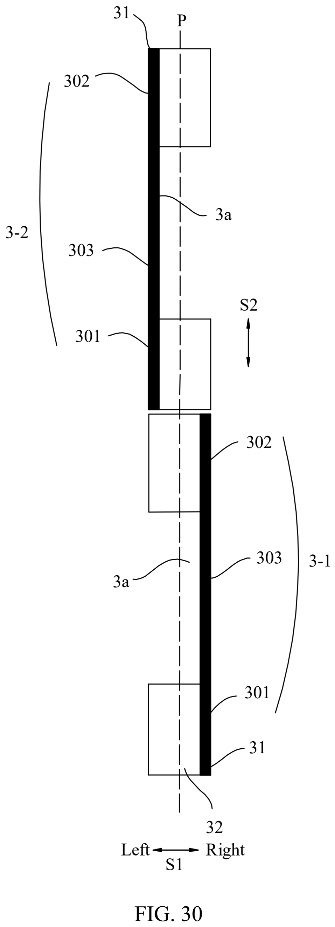

Refer to FIG. 30, a shaded part in FIG. 30 represents the connection region 31, and is only used to distinguish the connection region 31 from the non-connection region 32. In this embodiment of this application, the first gasket 3-1 and the second gasket 3-2 are included in the axial direction S2 parallel to the rotating shaft mechanism 1. A connection region of the first gasket 3-1 and a connection region of the second gasket 3-2 are located on two sides of the reference plane P of the rotating shaft mechanism 1. That is, the connection region 31 of the first gasket 3-1 and the connection region 31 of the second gasket 3-2 are not located on the same side, and the connection region of the second gasket 3-2 is arranged on the first side edge 321 of the first gasket 3-1. As shown in FIG. 30, the connection region 31 of the first gasket 3-1 is located at a right side of the reference plane P, and the connection region 31 of the second gasket 3-2 is located at a left side of the reference plane P. In this way, the connection region of the first gasket 3-1 and the connection region of the second gasket 3-2 are located at two sides of the reference plane P, which is beneficial to providing good support function for the left and right sides of the flexible screen 2 during rotation of the rotating shaft mechanism 1, thereby further reducing abnormal noise. Refer to FIG. 5, the reference plane P is perpendicular to the flexible screen 2 in the unfolded state, and a rotating shaft C1 of the first plate 11 relative to the rotating shaft body 10 and a rotating shaft C2 of the second plate 12 relative to the rotating shaft body 10 are symmetrical about the reference plane P. FIG. 5 only shows approximate positions of the rotating shaft C1 and the rotating shaft C2. An axial direction of the rotating shaft mechanism in this embodiment of this application is an extending direction of the rotating shaft C1 and the rotating shaft C2.

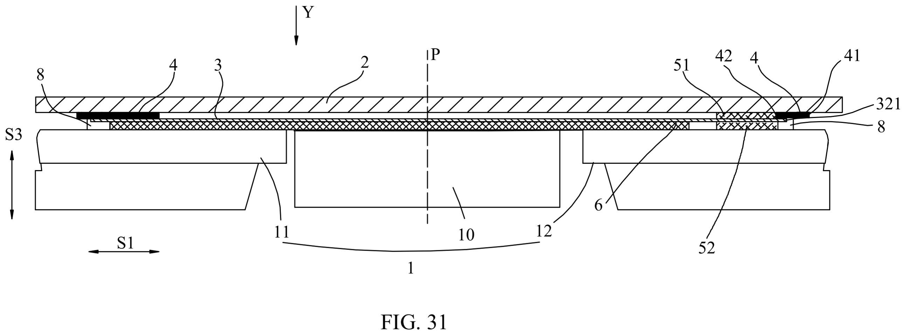

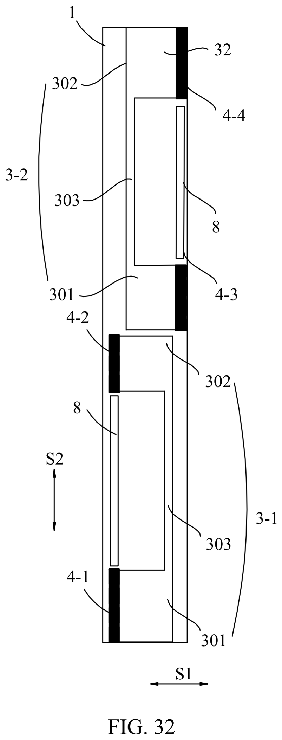

In this embodiment of this application, the first gasket 3-1 and the second gasket 3-2 are both provided with the notch 3a in a middle segment, and the first gasket 3-1 and the second gasket 3-2 are arranged in the axial direction S2 of the rotating shaft mechanism 1. In this way, two segments that are relatively away from each other of the first gasket 3-1 and the second gasket 3-2 are at located at two ends of the rotating shaft mechanism 1, that is, the first segment 301 of the first gasket 3-1 and the second segment 302 of the second gasket 3-2 are close to the two ends of the rotating shaft mechanism 1 in the direction S2. Segments adjacent to the first gasket 3-1 and the second gasket 3-2 can fill the middle segment of the rotating shaft mechanism 1, that is, the second segment 302 of the first gasket 3-1 and the first segment 302 of the second gasket 3-2 are adjacent to each other, and the two segments are located in the middle segment of the rotating shaft mechanism (for understanding with reference to FIG. 31 and FIG. 32), to satisfy a product having a large gap at two ends and in the middle between the rotating shaft mechanism 1 and the flexible screen 2. In addition, the notch 3a provided for each gasket is beneficial to reducing the weight of the foldable mobile terminal. In addition, in this embodiment of this application, two independent gaskets are arranged, so that strength of use of a single gasket can be improved.

Refer to FIG. 32, an embodiment of this application provides a schematic diagram of the gasket shown in FIG. 30 assembled in a foldable mobile terminal. The connection region 31 of the first gasket 3-1 is fixedly connected to the second plate 12, and the connection region 31 of the second gasket 3-2 is fixedly connected to the first plate 11. There are also four screen protection layers 4: a first screen protection layer 4-1, a second screen protection layer 4-2, a third screen protection layer 4-3, and a fourth screen protection layer 4-4, where the first screen protection layer 4-1 and the second screen protection layer 4-2 are located on the first side edge 321 of the first gasket 3-1, and are respectively arranged corresponding to the first segment 301 and the second segment 302 of the first gasket 3-1; and the third screen protection layer 4-3 and the fourth screen protection layer 4-4 are located on the first side edge 321 of the second gasket 3-2, and are respectively arranged corresponding to the first segment 301 and the second segment 302 of the second gasket 3-2. In addition, each screen protection layer is located on the first side edge 321 of a corresponding segment. The second elastic support layer 8 is arranged at the notch 3a, to further provide an elastic support function for the flexible screen 2.

In this embodiment of this application, a plurality of gasket structures and a notch structure are modularized, and mixed into a design. A plurality of gaskets having a notch structure (gaskets in a concave shape) are arranged, and are fixed between the rotating shaft mechanism 1 and the flexible screen 2. A screen protection layers 4 with a plurality of small-area long strip-shaped structure of corresponding sizes are used, so that strength of the concave gasket structure can be improved, a relative position of the rotating shaft mechanism 1 and the flexible screen 2 can be ensured, and an effect of abnormal noise of the rotating shaft mechanism 1 can be resolved.

Definitely, the quantity of gaskets 3 is not limited to two, and may be more than two. Connection regions 31 of a part of gaskets 3 are fixedly connected to the first plate 11, and connection regions of the other gaskets 3 are fixedly connected to the second plate 12. Some or all of the gaskets 3 may be further provided with notches, to adapt to foldable mobile terminal products of different structures.

For an example in which the gasket 3 is provided with the notch 3a or there are a plurality of gaskets 3, the screen protection layer 4 may also be of a large-area sheet shape, that is, a width and a length of the screen protection layer 4 are respectively roughly equal to or slightly less than a width and a length of the bending portion 22 of the flexible screen 2. The screen protection layer 4 extends from the first plate 11 to the second plate 12, as screen protection layers 4 shown in FIG. 5, FIG. 11, and FIG. 13 to FIG. 16.

In addition, in this embodiment of this application, the connection region 31 of the gasket 3 may further be fixedly connected to the rotating shaft body 10. At least one of two side edges of the connection region 31 that are arranged in the direction S1 is provided with the non-connection region 32. The non-connection region 32 extends to the first plate 11 or extends to the second plate 12.

Refer to FIG. 5, FIG. 10 to FIG. 17, FIG. 22, FIG. 23, and FIG. 27 for a comprehensive understanding. It should be understood that, to reduce contact wear between the gasket 3 and the rotating shaft body 10, in this embodiment of this application, an elastic layer 6 may be further arranged, and the elastic layer 6 is fixed to a surface (a second surface 34 in FIG. 17) of a side of the gasket 3 facing the rotating shaft mechanism 1. The gasket 3 is in contact with the rotating shaft mechanism 1 through the elastic layer 6. In a situation in which the gasket 3 has N segments, the elastic layer may also have N segments. The elastic layer 6 is an elastic mylar or elastic adhesive layer.

Refer to the foregoing descriptions about embodiments of FIG. 13, FIG. 14, FIG. 15, and FIG. 16. In the foregoing embodiments, the screen protection layer 4 can cover most of a region of the flexible screen. In the direction S1, the screen protection layer 4 includes the first side wall 41 and the second side wall 42 that are arranged opposite to each other. The second side wall 42 extends to the first plate 11, and the first side wall 41 extends to the second plate 12. During rotation of the rotating shaft mechanism 1, the first side edge 321 of the gasket 3 is located outside or inside the first side wall.

To achieve the foregoing objective, a calculation formula for a width $L_1$ of the gasket 3 is given below:

$$\begin{cases} L_{1d} - L_{2d} - L_m > 0 \\ L - L_1 > 0 \end{cases} \text{ or } L_{2d} - L_{1d} > 0;$$

a width range of the gasket 3 is calculated by using the foregoing formula as follows:

$$L > L_1 > \frac{(R + H_1 + H_2 + K_1 H_3)(180 + \pi(90 + \theta)\tan\theta)}{180 \tan\theta} - \frac{m}{\sin\theta} + L_{2d} \text{ or } 2L_{2d} > L_1;$$

the width of the gasket 3 satisfies the foregoing condition, which can avoid abnormal noise of the rotating shaft caused by relative position movement and overflowing with glue of the rotating shaft mechanism 1 and the flexible screen 2.

$H_1$ is a thickness of the flexible screen 2; $H_2$ is a thickness of the screen protection layer 4; $H_3$ is a thickness of the gasket 3; R is a radius of an inner screen rounded corner of the arc segment of the flexible screen 2 when the flexible screen is in a folded state; $\theta$ is an angle between the straight line segment 221 of the flexible screen 2 and a vertical direction when the flexible screen 2 is in the folded state; $L_1$ is the width of the gasket 3; L is a width of the rotating shaft mechanism 1 when the flexible screen is in an unfolded state; and $m$ is a distance between a side edge 311 of the gasket 3 close to the connection region and the reference plane P of the rotating shaft mechanism 1, and the side edge 311 of the gasket 3 close to the connection region is defined as the second side edge 311 in this specification. $K_1$ is a bending neutral layer coefficient of the gasket 3; $L_{2d}$ is a distance between a first side edge 321 of the non-connection region that is away from the connection region and that is of the screen protection layer 4 close to the gasket 3 and the reference plane P when the flexible screen is in the unfolded state; $L_m$ is a movement distance of the non-connection region of the gasket 3 away from the first side edge 321 of the connection region when the flexible screen from the unfolded state to the folded state; $L_{1d}$ is a distance between the non-connection region of the gasket 3 away from the first side edge 321 of the connection region and the reference plane P when the flexible screen is in the unfolded state.

The bending neutral layer coefficient $K_1$ of the gasket 3 is a bending characteristic of a material, is affected by factors such as the material, a bending angle, and a material thickness, and may be calculated by querying a neutral layer coefficient table to query a value of a neutral layer coefficient of a corresponding material, or through a neutral layer calculation formula.

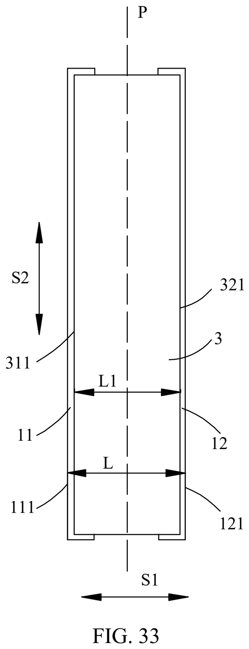

$L$ is the width of the rotating shaft mechanism 1 when the rotating shaft mechanism 1 is in the unfolded state, and generally refers to a distance between an outer edge 111 of the first plate 11 and an outer edge 121 of the second plate 12. Refer to FIG. 33, $L_1$ is the width of the gasket 3, and is a distance between the second side edge 311 and the first side edge 321.

Refer to FIG. 17, FIG. 23, FIG. 27, and FIG. 31 again, the screen protection layer 4 has a strip-shaped structure. The screen protection layer 4 is arranged on a side of the non-connection region away from the connection region 31. In the direction S1, the screen protection layer 4 includes a first side wall 41 and a second side wall 42 that are arranged opposite to each other. The first side wall 41 is located on the first side edge 321. During rotation of the rotating shaft mechanism 1, the first side edge 321 is always located outside the first side wall 41, or between the first side wall 41 and the second side wall 42.

In this embodiment of this application, the screen protection layer 4 has a strip-shaped structure. The gasket is fixedly connected to the first plate 11 or the second plate 12 by using the adhesive layer. A width of the gasket 3 may be calculated according to the following formula:

When $L_{1d} > L_{2d}$, the width $L_1$ of the gasket 3 is in a range of:

$$L > L_1 > \frac{(R+H_1+H_2+K_1H_3)(180+\pi(90+\theta)\tan\theta)}{180\tan\theta} - \frac{m}{\sin\theta} + L_{2d}; \text{ or}$$

when $L_{2d} > L_{1d} > L_{3d}$, the width $L_1$ of the gasket is in a range of:

$$L_1 > \frac{(R+H_1+H_4+K_1H_3)(180+\pi(90+\theta)\tan\theta)}{180\tan\theta} - \frac{m}{\sin\theta} + L_{3d};$$

where $H_1$ is a thickness of the flexible screen; $H_2$ is a thickness of the screen protection layer; $H_3$ is a thickness of the gasket; $H_4$ is a thickness of the adhesive layer; R is a radius of an inner screen rounded corner of the arc segment 222 of the flexible screen 2 when the flexible screen 2 is in a folded state; $\theta$ is an angle between the straight line segment 221 of the flexible screen 2 and a vertical direction when the flexible screen 2 is in the folded state; $L_1$ is the width of the gasket 3; L is a width of the rotating shaft mechanism when the flexible screen is in an unfolded state; m is a distance between a side edge 311 (a second side edge 311 of the gasket 3) of the gasket 3 close to the connection region and the reference plane P of the rotating shaft mechanism 1 when the flexible screen 2 is in a folded state; $K_1$ is a bending neutral layer coefficient of the gasket; $L_{1d}$ is a distance between a first side edge 321 of the non-connection region of the gasket away from the connection region and the reference plane when the flexible screen is in the in the unfolded state; $L_{2d}$ is a distance between the first side wall 41 of the screen protection layer 4 and the reference plane P when the flexible screen is in the unfolded state; and $L_{3d}$ is a distance between the second side wall 42 of the screen protection layer and the reference plane P of the rotating shaft mechanism 1 when the flexible screen is in the unfolded state, where the reference plane is perpendicular to the flexible screen in the unfolded state, and a rotating shaft of the first plate relative to the rotating shaft body and a rotating shaft of the second plate relative to the rotating shaft body are symmetrical about the reference plane.

Calculating the width of the gasket 3 through the foregoing method has high accuracy.

For an example in which the connection region 31 is fixedly connected to the second plate 12 and the first side edge 321 is located on one side of the first plate 11, during folding or unfolding of the flexible screen 2, a positional relationship between the first side edge 321 of the gasket 3 and a side wall of the screen protection layer 4 away from the connection region 31 is the same as the foregoing arrangement principle, and details are not described in this application again.

The foregoing descriptions are merely exemplary embodiments of this application, and a person of ordinary skill in the art may make various improvements and modifications without departing from the spirit of this application. All such improvements and refinements shall fall within the protection scope of this application.

**Claims**

1. A foldable mobile terminal, comprising:

    a rotating shaft mechanism, comprising a rotating shaft body and a rotating member, wherein the rotating member is rotatably arranged on the rotating shaft body;
    a flexible screen, arranged on a side of the rotating shaft mechanism, wherein the rotating member is configured to rotate about the rotating shaft body to cause the flexible screen to switch between a folded state and an unfolded state; and
    a gasket, arranged between the rotating shaft mechanism and the flexible screen, wherein in an arrangement direction of the rotating shaft body and the rotating member, the gasket comprises a connection region and a non-connection region that are connected to each other, the connection region is fixedly connected to at least one of the rotating shaft body, the rotating member, or the flexible screen, and the non-connection region is slidably arranged between the rotating shaft body and the flexible screen.

2. The foldable mobile terminal according to claim 1, wherein the rotating member comprises a first plate and a second plate, the first plate and the second plate are respectively rotatably connected to two sides of the rotating shaft body, and one of the first plate and the second plate is fixedly connected to the connection region.

3. The foldable mobile terminal according to claim 2, wherein when the flexible screen is in the folded state, the non-connection region extends from the rotating shaft body to the other of the first plate and the second plate.

4. The foldable mobile terminal according to claim 2 or 3, further comprising a screen protection layer located between the gasket and the flexible screen, wherein the flexible screen comprises a non-display surface facing the gasket, the screen protection layer is connected to the non-display surface, and during folding or unfolding of the flexible screen, at least a part of a side of the non-connection region away from the connection region is always located on a surface of the screen protection layer facing away from the flexible screen.

5. The foldable mobile terminal according to claim 4, wherein the side of the non-connection region away from the connection region comprises at least one notch.

6. The foldable mobile terminal according to claim 5, further comprising a first elastic support layer, wherein the first elastic support layer is fixed to the non-display surface of the flexible screen, the first plate, or the second plate, and the first elastic support layer is located in the notch.

7. The foldable mobile terminal according to claim 5 or 6, wherein in an axial direction of the rotating shaft mechanism, the gasket comprises N segments connected to each other, the notch is formed between adjacent segments, and the foldable mobile terminal comprises N screen protection layers arranged parallel to the axial direction of the rotating shaft mechanism and respectively in one-to-one correspondence with the segments, wherein N is an integer greater than 1.

8. The foldable mobile terminal according to any one of claims 4 to 7, comprising N gaskets in the axial direction of the rotating shaft mechanism, wherein adjacent gaskets are spaced apart from each other, and N is an integer greater than 1.

9. The foldable mobile terminal according to claim 8, further comprising a second elastic support layer, wherein the second elastic support layer is fixed to the non-display surface, the first plate, or the second plate, and the second elastic support layer is located between adjacent gaskets.

10. The foldable mobile terminal according to claim 9, comprising at least two gaskets in the axial direction parallel to the rotating shaft mechanism, wherein connection regions of a part of gaskets are fixed to the first plate, and connection regions of the other gaskets are fixed to the second plate.

11. The foldable mobile terminal according to any one of claims 2 to 10, comprising an elastic layer, arranged between the gasket and the rotating shaft mechanism, wherein the gasket is in contact with the first plate, the second plate, and the rotating shaft body through the elastic layer.

12. The foldable mobile terminal according to claim 11, wherein the elastic layer is an elastic mylar or elastic adhesive layer.

13. The foldable mobile terminal according to claim 1, wherein the rotating member comprises a first plate and a second plate, wherein the first plate and the second plate are respectively rotatably connected to two sides of the rotating shaft body, the connection region is fixed to the rotating shaft body, and the non-connection region extends between the first plate and the flexible screen or extends between the second plate and the flexible screen.

14. The foldable mobile terminal according to any one of claims 4 to 13, wherein in the arrangement direction of the rotating shaft body and the rotating member, the screen protection layer comprises a first side wall and a second side wall that are arranged opposite to each other, wherein the second side wall extends to one of the first plate and the second plate, the first side wall extends to the other of the first plate and the second plate, and the first side wall is located on a side of the screen protection layer away from the connection region; and during unfolding or folding of the flexible screen, a side edge of the non-connection region away from the connection region is always located on the same side of the first side wall.

15. The foldable mobile terminal according to claim 14, wherein the flexible screen comprises an arc segment and two straight line segments, wherein the arc segment is connected between the two straight line segments, the two straight line segments are respectively opposite to the first plate and the second plate when the flexible screen is in the folded state, and a width $L_1$ of the gasket is in a range of:

$$L > L_1 > \frac{(R+H_1+H_2+K_1H_3)(180+\pi(90+\theta)\tan\theta)}{180\tan\theta} - \frac{m}{\sin\theta} + L_{2d} \text{ or } 2L_{2d} > L_1$$

wherein $H_1$ is a thickness of the flexible screen; $H_2$ is a thickness of the screen protection layer; $H_3$ is a thickness of the gasket; R is a bending radius of a display surface of the arc segment when the flexible screen is in the folded state; $\theta$ is an angle between the straight line segment and a vertical direction when the flexible screen is in the folded state; $L_1$ is the width of the gasket; $L$ is a width of the rotating shaft mechanism when the flexible screen is in the unfolded state; $m$ is a distance between a side edge of the connection region away from the non-connection region and a reference plane of the rotating shaft mechanism when the flexible screen is in the folded state; $K_1$ is a bending neutral layer coefficient of the gasket; and $L_{2d}$ is a distance between the first side wall of the screen protection layer and the reference plane when the flexible screen is in the unfolded state, wherein the reference plane is perpendicular to the flexible screen in the unfolded state, and a rotating shaft of the first plate relative to the rotating shaft body and a rotating shaft of the second plate relative to the rotating shaft body are symmetrical about the reference plane.

16. The foldable mobile terminal according to any one of claims 4 to 14, wherein the screen protection layer is arranged on the side of the non-connection region away from the connection region, and in the arrangement direction of the rotating shaft body and the rotating member, the screen protection layer comprises a first side wall and a second side wall that are arranged opposite to each other, and the first side wall is located on a side of the screen protection layer away from the connection region; and
during folding or unfolding of the flexible screen, a side edge of the non-connection region away from the connection region is always located on a side of the first side wall away from the rotating shaft body, or during folding or unfolding of the flexible screen, a side edge of the non-connection region away from the connection region is always located between the first side wall and the second side wall.

17. The foldable mobile terminal according to claim 16, wherein the flexible screen comprises an arc segment and two straight line segments, wherein the arc segment is connected between the two straight line segments, the two straight line segments are respectively opposite to the first plate and the second plate when the flexible screen is in the folded state, and the connection region is fixedly connected to at least one of the rotating shaft body, the rotating member, or the flexible screen through an adhesive layer; and

when $L_{1d} > L_{2d}$, a width $L_1$ of the gasket is in a range of:

$$L > L_1 > \frac{(R+H_1+H_2+K_1H_3)(180+\pi(90+\theta)\tan\theta)}{180\tan\theta} - \frac{m}{\sin\theta} + L_{2d};$$

or
when $L_{2d} > L_{1d} > L_{3d}$, a width $L_1$ of the gasket is in a range of:

$$L_1 > \frac{(R+H_1+H_4+K_1H_3)(180+\pi(90+\theta)\tan\theta)}{180\tan\theta} - \frac{m}{\sin\theta} + L_{3d},$$

wherein $H_1$ is a thickness of the flexible screen; $H_2$ is a thickness of the screen protection layer; $H_3$ is a thickness of the gasket; $H_4$ is a thickness of the adhesive layer; R is a bending radius of a display surface of the arc segment when the flexible screen is in the folded state; $\theta$ is an angle between the straight line segment and a vertical direction when the flexible screen is in the folded state; $L_1$ is the width of the gasket; $L$ is a width of the rotating shaft mechanism when the flexible screen is in the unfolded state; and m is a distance between a side edge of the connection region away from the non-connection region and a reference plane of the rotating shaft mechanism when the flexible screen is in the folded state; $K_1$ is a bending neutral layer coefficient of the gasket; $L_{1d}$ is a distance between the side edge of the non-connection region away from the connection region and the reference plane of the rotating shaft mechanism when the flexible screen is in the unfolded state; $L_{2d}$ is a distance between the first side wall of the screen protection layer and the reference plane of the rotating shaft mechanism when the flexible screen is in the unfolded state; and $L_{3d}$ is a distance between the second side wall of the screen protection layer and the reference plane of the rotating shaft mechanism when the flexible screen is in the unfolded state, wherein the reference plane is perpendicular to the flexible screen in the unfolded state, and a rotating shaft of the first plate relative to the rotating shaft body and a rotating shaft of the second plate relative to the rotating shaft body are symmetrical about the reference plane.

FIG. 1

FIG. 2

FIG. 3

FIG. 4

FIG. 5

EP 4 648 393 A1

FIG. 6

3

31  32  321

S2

S1

FIG. 7

FIG. 8

<u>3</u>

32

321

31

31

31

S2

S1

FIG. 9

Outer ← → Inner

FIG. 10

FIG. 11

FIG. 12

FIG. 13

P

5

3

6

4

2

321

41

FIG. 14

FIG. 15

FIG. 16

FIG. 17

FIG. 18

FIG. 19

FIG. 20

S1

31

302

S2

303

3a

301

31

32

FIG. 21

FIG. 22

FIG. 23

EP 4 648 393 A1

FIG. 24

FIG. 25

3-3

3-2

S2

3-1

S1

FIG. 26

FIG. 27

FIG. 28

FIG. 29

FIG. 30

FIG. 31

FIG. 32

FIG. 33

## INTERNATIONAL SEARCH REPORT

| International application No. |
| --- |
| **PCT/CN2023/131704** |

| A. | CLASSIFICATION OF SUBJECT MATTER |
| --- | --- |

H04M 1/02(2006.01)i

According to International Patent Classification (IPC) or to both national classification and IPC

| B. | FIELDS SEARCHED |
| --- | --- |

Minimum documentation searched (classification system followed by classification symbols)

IPC:H04M, G06F

Documentation searched other than minimum documentation to the extent that such documents are included in the fields searched

Electronic data base consulted during the international search (name of data base and, where practicable, search terms used)

CNTXT; CNKI; WOTXT; ENTXT; VEN: 折叠, 终端, 转轴, 转动, 柔性屏, 垫片, 滑动, 异响, 保护, 弹性, foldable, terminal, axial, rotate, flexible screen, gasket, slide, abnormal sound, protect, elastic

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114401328 A (GUANGDONG OPPO MOBILE TELECOMMUNICATIONS CO., LTD.) 26 April 2022 (2022-04-26) see description, pages 2-10 | 1-17 |
| A | CN 115962217 A (HONOR TERMINAL CO., LTD.) 14 April 2023 (2023-04-14) entire document | 1-17 |
| A | WO 2018148996 A1 (WUHAN CHINA STAR OPTOELECTRONICS TECHNOLOGY CO., LTD.) 23 August 2018 (2018-08-23) entire document | 1-17 |
| A | WO 2021007811 A1 (SHENZHEN ROYOLE TECHNOLOGIES CO., LTD.) 21 January 2021 (2021-01-21) entire document | 1-17 |
| A | WO 2019134696 A1 (HANGZHOU AMPHENOL PHOENIX TELECOM PARTS CO., LTD.) 11 July 2019 (2019-07-11) entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 February 2024** | **23 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/131704**

| Patent document cited in search report | | | Publication date (day/month/year) | Patent family member(s) | | | Publication date (day/month/year) |
|---|---|---|---|---|---|---|---|
| CN | 114401328 | A | 26 April 2022 | None | | | |
| CN | 115962217 | A | 14 April 2023 | None | | | |
| WO | 2018148996 | A1 | 23 August 2018 | US | 2019094916 | A1 | 28 March 2019 |
| | | | | US | 10606320 | B2 | 31 March 2020 |
| WO | 2021007811 | A1 | 21 January 2021 | None | | | |
| WO | 2019134696 | A1 | 11 July 2019 | US | 2021067614 | A1 | 04 March 2021 |
| | | | | US | 11223710 | B2 | 11 January 2022 |

Form PCT/ISA/210 (patent family annex) (July 2022)

**REFERENCES CITED IN THE DESCRIPTION**

**Patent documents cited in the description**

- CN 202310462969X